(19) Europäisches Patentamt
European Patent Office
Office européen des brevets

(11) **EP 2 008 381 B1**

(12) **EUROPEAN PATENT SPECIFICATION**

(45) Date of publication and mention
of the grant of the patent:
**07.09.2011 Bulletin 2011/36**

(51) Int Cl.:
**H04B 17/00** (2006.01)

(21) Application number: **06762394.2**

(86) International application number:
**PCT/EP2006/006509**

(22) Date of filing: **04.07.2006**

(87) International publication number:
**WO 2007/118495 (25.10.2007 Gazette 2007/43)**

(54) **METHOD FOR TRANSFERRING POWER INFORMATION USED BY A TELECOMMUNICATION DEVICE FOR WEIGHTING AT LEAST ONE PILOT SIGNAL**

VERFAHREN ZUR ÜBERMITTLUNG VON DURCH EIN TELEKOMMUNIKATIONSGERÄT ZUM GEWICHTEN MINDESTENS EINES PILOTSIGNALS VERWENDETEN LEISTUNGSINFORMATIONEN

PROCEDE POUR TRANSFERER DES INFORMATIONS DE PUISSANCE UTILISEES PAR UN DISPOSITIF DE TELECOMMUNICATIONS POUR PONDERER AU MOINS UN SIGNAL PILOTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.04.2006 EP 06290643**

(43) Date of publication of application:
**31.12.2008 Bulletin 2009/01**

(73) Proprietors:
• **Mitsubishi Electric R&D Centre Europe B.V.**
**1119 NS Schiphol Rijk (NL)**
Designated Contracting States:
**FR**
• **MITSUBISHI DENKI KABUSHIKI KAISHA**
**Chiyoda-ku**
**Tokyo 100-8310 (JP)**
Designated Contracting States:
**AT BE BG CH CY CZ DE DK EE ES FI GB GR HU IE IS IT LI LT LU LV MC NL PL PT RO SE SI SK TR**

(72) Inventors:
• **HARA, Yoshitaka**
**F-35708 Rennes Cedex 7 (FR)**
• **MOURAD, Abdel-Majid**
**F-35708 Rennes Cedex 7 (FR)**

(74) Representative: **Maillet, Alain**
**Cabinet Le Guen Maillet**
**5, place Newquay**
**B.P. 70250**
**35802 Dinard Cedex (FR)**

(56) References cited:
**EP-A- 0 741 467    EP-A- 1 630 973**
**WO-A-03/001761    WO-A-2004/038985**

**Description**

The present invention relates generally to telecommunication systems and in particular, to methods and devices for transferring power information representative of power coefficients used by the first telecommunication device for weighting at least one pilot signal transferred by the first telecommunication device to a second telecommunication device.

Recently, efficient transmission schemes in space and frequency domains have been investigated to meet the growing demand for high data rate wireless communications. In recent years, Orthogonal Frequency Division Multiplexing Access scheme have been discussed for mobile communication systems.

In such systems, the base station is expected to control the transmission of signals to terminals. The base station determines the modulation and coding schemes to be used for transferring signals representative of groups of data to the terminals and/or determines the terminals to which, signals have to be transferred on a subset of frequency subbands, according the quality of the communication channel between the base station and the terminals.

For that, the base station obtains from the terminals, information related to the quality of the channel between the base station and the terminals.

Classically, the Signal to Interference plus Noise Ratio measured by the terminals is used as a channel quality indication. Each terminal reports to the base station channel quality indication for each of the subbands of the OFDMA system. Such channel quality indications reporting is performed by transferring a large amount of information bits from each terminal to the base station. Such reporting requires an important part of the available bandwidth of the OFDMA system.

In other cases, the power of the signals received by the terminal can is used as a channel quality indication. Such channel quality indications reporting is performed by transferring a large amount of information bits from each terminal to the base station. Such reporting requires an important part of the available bandwidth of the OFDMA system.

When the base station and/or the terminals have multiple antennas, the amount of information to be transferred as channel quality indications increases according to the number of antennas. When the channel is reciprocal, e.g. in Time Division Multiplex systems, the channel conditions are obtained according to the following method : each terminal transfers pilot signals to the base station, the base station receives the pilot signals, determines, for each of the terminals, the channel responses from the received pilot signals, forms a channel matrix which is representative of the channel conditions and uses the determined matrix in order to send the signals which have to be transferred to the respective terminals.

The coefficients of the channel matrix are the complex propagation gain between the antennas of the base station and the antennas of the terminal which sent the pilot signals.

Such determination of the channel conditions is effective when the terminal receives, in parallel with the signals transferred by the base station, only noise components in each subband. If the terminal receives interference components of different power or different directions of arrival in some subbands, it is also necessary for the terminals to report their respective characteristics, as example between antennas, or their respective Signal to Interference plus Noise Ratio in each subband. Such reporting requires also an important part of the available bandwidth of the OFDMA system.

Recently, e.g. in Article 54(3)-document EP-1-804409, it has been proposed by the applicant a method and a device for reporting information related to interference components received by a telecommunication device and power information used by the telecommunication device for transferring information related to the interference components to another telecommunication device.

In that proposition, the pilot signals are weighted by the interference components received by a telecommunication device and the power information in order to provide a constant power transmission of pilot signals. In order to enable the other telecommunication device to distinguish the weighting of the pilot signals by the interferences with the power information, the power information is transferred each time pilot signals are transferred.

Such reporting requires also an important part of the available bandwidth of the OFDMA system.

The patent application EP-A-0741467 discloses a method and apparatus for power control in wireless networks.

The aim of the invention is therefore to propose methods and devices which enable the reporting of the interference components and the power information without requiring an important part of the available bandwidth of the wireless telecommunication system.

To that end, the present invention concerns a method for transferring information related to interference components received by a first telecommunication device and power information used by the first telecommunication device for weighting at least one pilot signal transferred by the first telecommunication device to a second telecommunication device, the first and the second telecommunication devices being linked through a wireless telecommunication network characterised by the at least one pilot signal being further weighted by the information related to interference components received by the first telecommunication device, and in that the method comprises the steps executed by the first telecommunication device of :

-     transferring plural weighted pilot signals at a first rate,

- transferring plural power information at a second rate which is strictly lower than the first rate.

The present invention concerns also a device for transferring information related to interference components received by a first telecommunication device and power information used by the first telecommunication device for weighting at least one pilot signal transferred by the first telecommunication device to a second telecommunication device, the first and the second telecommunication devices being linked through a wireless telecommunication network characterised by the at least one pilot signals being further weighted by the information related to interference components received by the first telecommunication device, and in that the device is included in the first telecommunication device and comprises :

- means for transferring plural weighted pilot signals at a first rate,
- means for transferring plural power information at a second rate which is strictly lower than the first rate.

Thus, the first telecommunication device can report the power of signals it receives in some frequency subbands to a second telecommunication device without decreasing in an important manner the bandwidth which is used for classical data transmission.

The inventor of the present invention has found that it is not necessary to transfer anytime the power information when pilot signals are transferred.

By transferring plural weighted pilot signals at a first rate, and plural power information at a second rate which is strictly lower than the first rate, the present invention aims to solve either the problems generated by multipath fading, shadowing and modification of the channel response between the first and the second telecommunication devices.

Thus, the first telecommunication device can report the interference components it receives in some frequency subbands to a second telecommunication device without decreasing in an important manner the bandwidth which is used for classical data transmission.

According to a particular feature, the plural weighted pilot signals are composed of:

- at least one first pilot signal weighted by the information related to interference components received by the first telecommunication device and the power coefficient, the power information representative of the power coefficient being memorized by the first telecommunication device,
- at least one second pilot signal weighted by the information related to interference components received by the first telecommunication device after the transfer of the at least one first pilot signal and the same power coefficient which weights the at least one first pilot signal.

Thus, as the interference components fluctuate a lot, the information related to the interference components are transferred at the highest rate.

According to a particular feature, the first rate is a predetermined rate or depends on the variation between the information related to interference components received by the first telecommunication device after the transfer bf the at least one first pilot signal and the information related to interference components received by the first telecommunication which weights the at least one first pilot symbols or depends on the variation of the channel response between the first and the second telecommunication devices.

Thus, the transfer of the information related to the interference components is optimized.

According to a particular feature, the second rate is a predetermined rate or depends on the variation between the information related to interference components received by the first telecommunication device after the transfer of the at least one first pilot signal and the information related to interference components received by the first telecommunication which weights the at least one first pilot symbols or depends on the variation of the long term channel response between the first and the second telecommunication devices.

Thus, the transfer of the information related to the interference components is optimized.

According to a particular feature, the predetermined rate is received from the second telecommunication device.

According to a particular feature, prior to transfer of a power information, the first telecommunication device checks if the memorized power information needs to be updated, obtains another power information and memorizes the other power information.

Thus, the power information is adapted to long term variation of the channel response between the first and the second telecommunication devices.

According to a particular feature, the first telecommunication device checks if the memorized power information needs to be updated by checking if a message representative of a request of an update of the power information has been transferred by the second telecommunication device to the first telecommunication device.

Thus, the first telecommunication device can be informed if the second telecommunication device needs that the power of the pilot signals needs to be modified.

According to a particular feature, the other power information is obtained by incrementing or decrementing the memorized the power information according to the content of message representative of a request of an update of the power information.

Thus, the modification of the power information is simplified.

According to a particular feature, the other power information is obtained by reading the power information comprised in the message representative of a request of an update of the power information.

Thus, the modification of the power information is simplified.

According to a particular feature, the other power information is calculated by the first telecommunication device.

According to a particular feature, the wireless telecommunication network comprises multiple frequency subbands and at least a pilot signal is transferred in each frequency subband.

According to still another aspect, the present invention concerns a method for controlling the transfer of signals to a first telecommunication device by a second telecommunication device through a wireless telecommunication network, the first and the second telecommunication devices being linked through a wireless telecommunication network, the second telecommunication device receiving from the first telecommunication device power information used by the first telecommunication device for weighting at least one pilot signal transferred by the first telecommunication device to the second telecommunication device, characterised by the at least one pilot signal being further weighted by information related to interference components received by the first telecommunication device and in that the method comprises the steps executed by the second telecommunication device of :

- receiving plural weighted pilot signals at a first rate,
- receiving plural power information at a second rate which is strictly lower than the first rate,
- determining, from at least one received pilot signal and from at least one power information received prior to the at least one received pilot signal, information representative of interference components received by the first telecommunication device,
- controlling the transfer of signals representative of a group of data to the first telecommunication device according to the determined information representative of interference components received by the first telecommunication device.

The present invention concerns also a device for controlling the transfer of signals to a first telecommunication device by a second telecommunication device through a wireless telecommunication network, the first and the second telecommunication devices being linked through a wireless telecommunication network, the second telecommunication device receiving from the first telecommunication device power information used by the first telecommunication device for weighting at least one pilot signal transferred by the first telecommunication device to the second telecommunication device the at least one pilot signal being further weighted by information related to interference components received by the first telecommunication device, characterised in that the device for controlling the transfer of signal is included in the second telecommunication device and comprises :

- means for receiving plural weighted pilot signals at a first rate,
- means for receiving plural power information at a second rate which is strictly lower than the first rate,
- means for determining, from at least one received pilot signal and from at least one power information received prior to the at least one received pilot signal, information representative of interference components received by the first telecommunication device,
- means for controlling the transfer of signals representative of a group of data to the first telecommunication device according to the determined information representative of interference components received by the first telecommunication device.

Thus, the second telecommunication device is informed about the power of the signals received by the first telecommunication device without decreasing in an important manner the bandwidth which is used for classical data transmission and is able to make suitable signal format like modulation and coding scheme or is able to select the first telecommunication device or devices which have good channel conditions for the transfer of signals representative of a group of data.

Thus, the second telecommunication device is informed about the interference components received by the first telecommunication device in some frequency subbands and is informed about power information used by the first telecommunication device without decreasing in an important manner the bandwidth which is used for classical data transmission and is able to make suitable signal format like modulation and coding scheme or is able to select the first telecommunication device or devices which have good channel conditions for the transfer of signals representative of a group of data.

According to a particular feature, the second telecommunication device checks if the power of the at least one received pilot signal is acceptable or not and if the power is not acceptable, transfers to the first telecommunication device a message representative of a request of an update of the power information.

According to a particular feature, the message representative of a request of an update of the power information comprises an information indicating if the power information needs to be incremented or decremented by the first telecommunication device.

According to a particular feature, the message representative of a request of an update of the power information comprises a power information that the first telecommunication device has to use.

According to a particular feature, the second telecommunication device transfers a message comprising the value of first and/or the second rate.

According to a particular feature, the method comprises the step of determining, from the weighted pilot signals, an information enabling the process of a group of data received from the first telecommunication device.

According to a particular feature, plural first telecommunication devices are linked to the second telecommunication device and at least one weighted pilot signal is received simultaneously from each first telecommunication device, the simultaneously received pilot signals being orthogonal pilot signals.

Thus, the transfer of the information related to the interference components is optimized.

According to a particular feature, at least one power information is received from each first telecommunication device at different time and/or in different frequency subbands.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computers programs are the same as those set out above related to the methods and devices according to the invention, they will not be repeated here.

The characteristics of the invention will emerge more clearly from a reading of the following description of an example embodiment, the said description being produced with reference to the accompanying drawings, among which :

Fig. 1 is a diagram representing the architecture of a first telecommunication system in which the present invention is implemented;

Fig. 2 is a diagram representing the architecture of a first telecommunication device which is used in the first telecommunication system;

Fig. 3 is a diagram representing the architecture of a second telecommunication device of the present invention which is used in the first telecommunication system;

Fig. 4a is a first algorithm executed by the first telecommunication device which is used in the first telecommunication system according to a first mode of realisation of the present invention;

Fig. 4b is a second algorithm executed by the first telecommunication device which is used in the first telecommunication system according to a second mode of realisation of the present invention;

Fig. 5a is a first algorithm executed by the second telecommunication device which is used in the first telecommunication system according to the first mode of realisation of the present invention;

Fig. 5b is a second algorithm executed by the second telecommunication device which is used in the first telecommunication system according to the second mode of realisation of the present invention;

Fig. 6 is a diagram representing the architecture of a second telecommunication system in which the present invention is implemented;

Fig. 7 is a diagram representing the architecture of a first telecommunication device which is used in the second telecommunication system;

Fig. 8 is a diagram representing the architecture of a channel interface of the first telecommunication device which is used in the second telecommunication system;

Fig. 9 is a diagram representing the architecture of a second telecommunication device which is used in the second telecommunication system;

Fig. 10 is a diagram representing the architecture of a channel interface of the second telecommunication device which is used in the second telecommunication system;

Fig. 11a is a first algorithm executed by the first telecommunication device which is used in the second telecommunication system according to a third mode of realisation of the present invention;

Fig. 11b is a second algorithm executed by the first telecommunication device which is used in the second telecommunication system according to a fourth mode of realisation of the present invention;

Fig. 12a is a first algorithm executed by the second telecommunication device which is used in the second telecommunication system according to the third mode of realisation of the present invention;

Fig. 12b is a second algorithm executed by the second telecommunication device which is used in the second telecommunication system according to the fourth mode of realisation of the present invention;

Fig. 13 is a diagram representing an example of signals transferred by the first telecommunication devices to the second first telecommunication device.

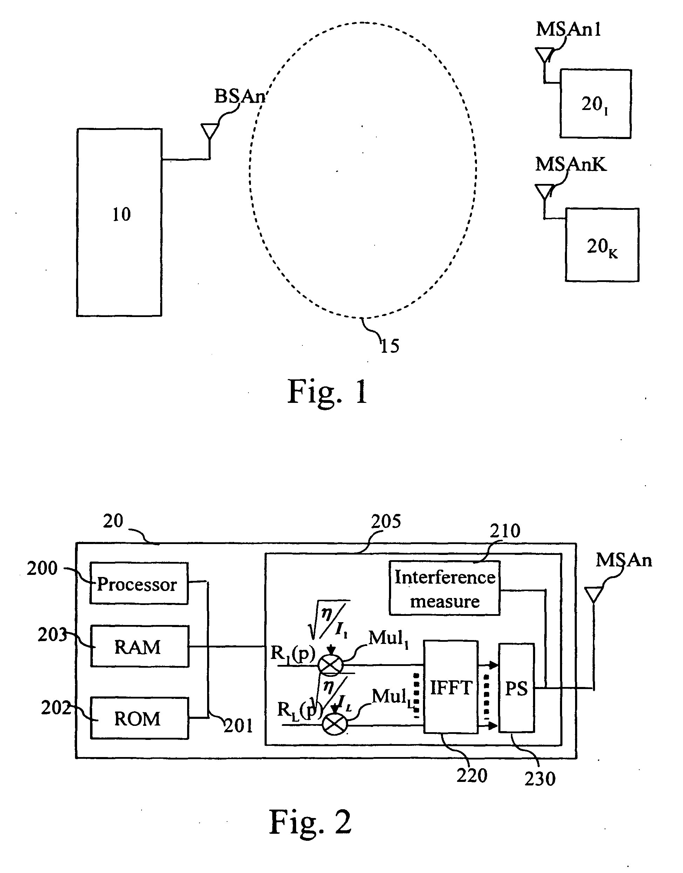

Fig. 1 is a diagram representing the architecture of a first telecommunication system in which the present invention is implemented.

In the first telecommunication system of the Fig. 1, at least one first telecommunication device $20_I$ or $20_K$ is linked through a wireless network 15 to a second telecommunication device 10 using an uplink and a downlink channel.

Preferably, and in a non limitative way, the second telecommunication device 10 is a base station or a node of the wireless network 15. The first telecommunication devices $20_I$ to $20_K$ are as example and in a non limitative way, terminals like mobile phones or personal digital assistants or personal computers.

The telecommunication network 15 is a wireless telecommunication system which uses Time Division Duplexing scheme (TDD). The signals transferred in uplink and downlink channels are duplexed in different time periods of the same frequency band. The signals transferred within the wireless network 15 share the same frequency spectrum. The channel responses between the uplink and downlink channels of the telecommunication network 15 are reciprocal.

Reciprocal means that if the downlink channel conditions are represented by a downlink matrix, the uplink channel conditions can be expressed by an uplink matrix which is the transpose of the downlink matrix.

The first telecommunication network 15 is according to the present invention, a wireless telecommunication system which uses Orthogonal Frequency Division Multiplexing Access scheme (OFDMA).

In an OFDMA scheme, the overall system bandwidth is partitioned into L plural orthogonal frequency subbands, which are also referred to as frequency bins or subchannels. With OFDMA, each frequency subband is associated with respective subcarriers upon which data may be modulated.

The second telecommunication device 10 transfers signals representatives of a group of data to the first telecommunication devices $20_I$ to $20_K$ through the downlink channel and the first telecommunication devices $20_I$ to $20_K$ transfer signals to the second telecommunication device 10 through the uplink channel.

The second telecommunication device 10 has one antenna BSAn. The second telecommunication device 10 determines the modulation and coding scheme to be used for transferring groups of data to each first telecommunication devices 20 and/or determines the first telecommunication device 20 to which, signals representative of a group of data have to be sent according to signals transferred by the first telecommunication devices 20 as it will be disclosed hereinafter.

The signals transferred by the first telecommunication devices $20_I$ to $20_K$ are signals representatives of a group of data and/or pilot signals which are weighted by power coefficients and preferably further weighted by at least a weight determined from the interference components measured by the first telecommunication devices $20_I$ to $20_K$ and/or signals representative of a power information $\eta$. Each first telecommunication device $20_I$ to $20_K$ has one antenna noted respectively MSAnl to MSAnK.

A group of data is as example a frame constituted at least by a header field and a payload field which comprises classical data like data related to a phone call or a video transfer and so on.

Pilot signals are predetermined sequences of symbols known by the telecommunication devices. Pilot signals are as example and in a non limitative way Walsh Hadamard sequences.

Fig. 2 is a diagram representing the architecture of a first telecommunication device according to a first mode of realisation of the present invention which is used in the first telecommunication system.

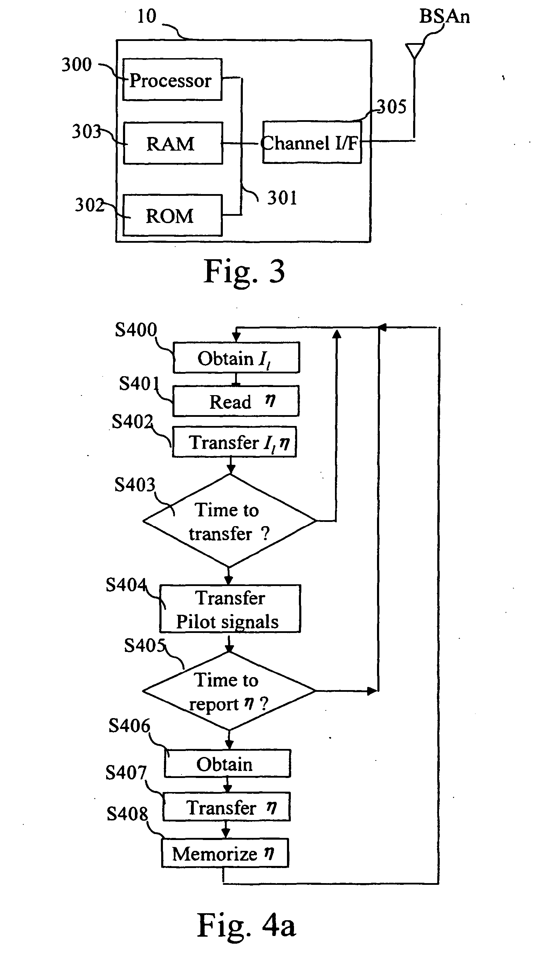

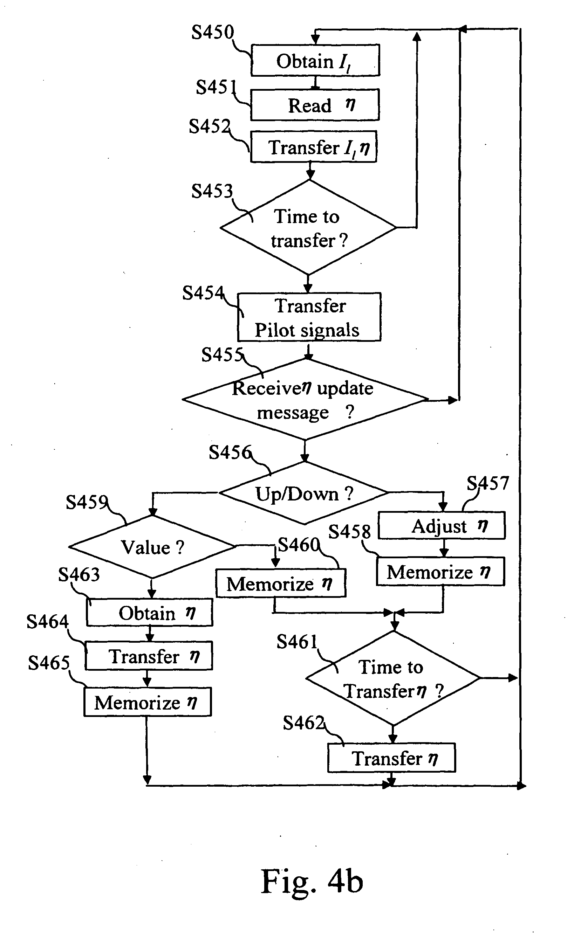

The first telecommunication device 20, as example the first telecommunication device $20_k$ with $k$ comprised between 1 and $K$, has, for example, an architecture based on components connected together by a bus 201 and a processor 200 controlled by programs related to the algorithm as disclosed in the Figs. 4a and 4b.

It has to be noted here that the first telecommunication device 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203 and a channel interface 205.

The read only memory ROM 202 contains instructions of the programs related to the algorithms as disclosed in the Fig. 4a and 4b which are transferred, when the first telecommunication device $20_k$ is powered on to the random access memory RAM 203.

The RAM memory 203 contains registers intended to receive variables, and the instructions of the programs related to the algorithms as disclosed in the Figs. 4a and 4b.

According to the first and second modes of realisation of the present invention, the processor 200 determines, for at least one frequency subbands, and preferably for each of the $l = 1$ to L frequency subbands of the OFDMA system, a weighting coefficient noted $\sqrt{\dfrac{\eta}{I_l}}$ which is determined from the interference components measured by the first telecommunication device $20_k$.

Each weighting coefficient $\sqrt{\dfrac{\eta}{I_l}}$ is determined from a power information $\eta$ which is a multiplying factor used for adjust the transmit power of the pilot signals into a given range of transmit power and the power $I_l$ of the interference components measured by the first telecommunication device $20_k$ in the $l$-th frequency subband.

It has to be noted here that, in a variant of realisation, the power $I_l$ of the interference components is forced to one even if the power $I_l$ of the interference components measured by the first telecommunication device $20_k$ in the $l$-th frequency subband is not equal to one.

The interference components are electromagnetic waveforms generated by other first telecommunication devices 20, electromagnetic waveforms radiated by any electric equipment and/or any other noise received by the first telecommunication device $20_k$.

The power information $\eta$ is a fixed predetermined value known shared by the first telecommunication device $20_k$ and the second telecommunication device 10 or is determined in order to adjust the transmission power of the pilot signals.

The power information $\eta$ is the multiplying factor used by the first telecommunication device $20_k$ for weighting the pilot signals.

It has to be noted here that, different power information can be determined for the $L$ frequency subbands. In such case, each determined power information is transferred to the second telecommunication device 10.

Each weighting coefficient $\sqrt{\dfrac{\eta}{I_l}}$ is used for weighting respectively a pilot signal to be transferred to the second telecommunication device 10 through each of the at most $L$ frequency subbands.

The channel interface 205 comprises an interference measurement module 210. When the second telecommunication device 10 transfers signals $s_l(p)$ $\quad s_l(p)(E[|s_l(p)|^2]=1)$ with a power $P_{BS,l}$ in the l-th frequency subband, the $p$-th received symbol $x_l(p)$ by the first telecommunication device $20_k$ in the $l$-th frequency subband is equal to $x_l(p) = \sqrt{P_{BS,l}}\,h_l s_l(p) + z_l(p)$,

where $h_l$ is the complex propagation gain in the frequency subband $l$ between the second telecommunication device 10 and the first telecommunication device $20_k$ and $z_l(p)$ is the interference component of the first telecommunication device $20_k$ which has a power $E[|z_l(p)|^2]=I_l$.

Preferably, the interference measurement module 210 determines, for each of the $l=1$ to $L$ frequency subbands, the power $I_l$ of the interference components in the $l$-th frequency subband by averaging, in the $l$-th frequency subband, $|z_l(p)|^2$ over a large number of samples. In a variant, the power $I$, is forced to the value one.

It has to be noted here that, the interferences components may vary in the different subcarrier frequencies included in a frequency subband. The interferences components in the subcarrier frequencies of a subband are then averaged.

In a variant of realisation, instead of averaging the interference components in each subcarrier, the measured interference components in each frequency subband are the interference components measured in at least a subcarrier of a frequency subband, as example the largest interference components measured in a frequency carrier of a frequency subband.

The channel interface 205 comprises at most $L$ multiplication modules. Preferably and in a non limitative way, the channel interface 205 comprises $L$ multiplication modules noted $Mul_l$ to $Mul_L$ which weights respectively the pilot signals $R_l(p)$ to $R_L(p)$ by the respective weighting coefficients $\sqrt{\eta/I_l}$.

The channel interface 205 comprises an Inverse Fast Fourier Transform module (IFFT) 220 which makes an inverse fast Fourier transform on each of the weighted pilot signals $R_l(p)$ to at most $R_L(p)$.

The channel interface 205 comprises a parallel to serial converter 230 which converted the at most $L$ inversed Fourier transformed weighted pilot signals into signals transferred by the antenna MSAn. The channel interface 205 further comprises means for transferring power information $\eta$ to the second telecommunication device 10.

**Fig. 3** is a diagram representing the architecture of a second telecommunication device of the present invention which is used in the first telecommunication system.

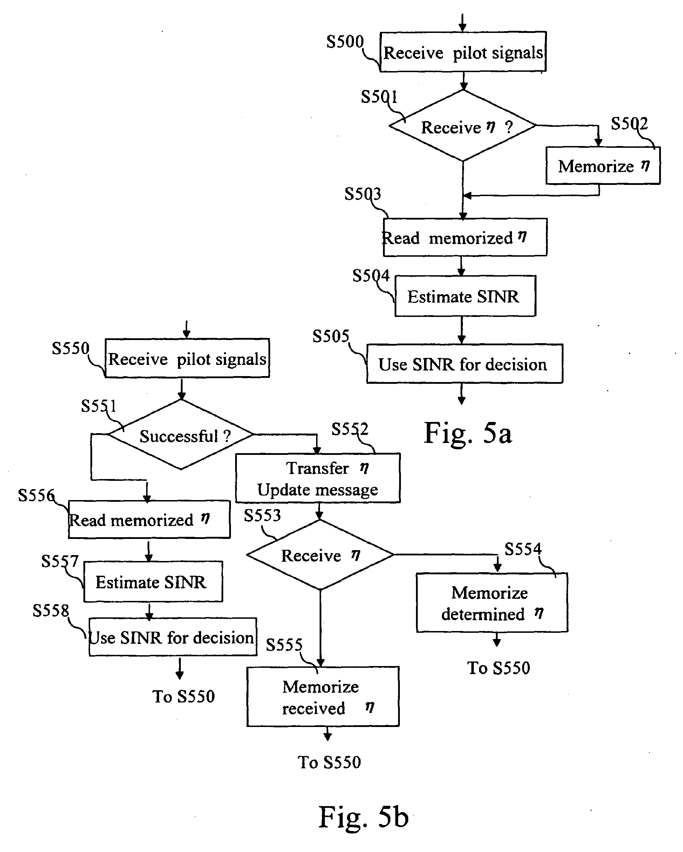

The second telecommunication device 10, has, for example, an architecture based on components connected together by a bus 301 and a processor 300 controlled by programs as disclosed in the Fig. 5a or 5b.

It has to be noted here that the second telecommunication device 10 is, in a variant, implemented into one or several dedicated integrated circuits which execute the same operations as the one executed by the processor 300 as disclosed hereinafter.

The bus 301 links the processor 300 to a read only memory ROM 302, a random access memory RAM 303 and a channel interface 305.

The read only memory ROM 302 contains instructions of the programs related to the algorithms as disclosed in the Fig. 5a or 5b which are transferred, when the second telecommunication 10 is powered on to the random access memory RAM 303.

The RAM memory 303 contains registers intended to receive variables, and the instructions of the programs related to the algorithms as disclosed in the Fig. 5a or 5b.

According to the first and second modes of realisation of the present invention, the processor 300 is able to determine from at least signals transferred by a first telecommunication device $20_k$ which are representative of pilot signals weighted by weighting coefficients $\sqrt{\eta/I_l}$ transferred in the frequency subbands of the OFDMA system, the modulation and coding scheme to be used for the transfer of groups of signals to that first telecommunication device $20_k$ and/or to determine the first telecommunication device 20k to which signals representative of a group of data have to be sent according to signals transferred by the first telecommunication devices 20.

In another variant of realisation, the processor 300 determines from the received pilot signals in the uplink channel, an information enabling the process of a group of data received from the first telecommunication device.

The information is, as example and in a non limitative way, the phase of the pilot signals which is used to compensate the phase rotation on the signals representative of groups of data received from that first telecommunication device $20_k$.

According to the first and second modes of realisation of the present invention, the channel interface 305 comprises means for receiving at least one power information $\eta$ from each second telecommunication device 20.

**Fig. 4a** is a first algorithm executed by the first telecommunication device which is used in the first telecommunication system according to a first mode of realisation of the present invention.

The present algorithm is more precisely executed by each of the first telecommunication devices $20_l$ to $20_K$.

At step S400, the processor 200 obtains from the channel interface 205 the power $I_l$ , with $l$=1 to at most $L,$ of the interference components received by the first telecommunication device $20_k$ in the at most $L$ respective frequency subbands.

In a variant, $I_l$ is forced to the value one.

At next step S401, the processor 200 reads in the RAM memory 203, the power information $\eta$.

At next step S402, the processor 200 commands the transfer of each of the weighting coefficients $\sqrt{\eta/I_l}$ to the channel interface 205.

At next step S403, the processor 200 checks whether or not it is time to transfer pilot signals to the second telecommunication device 10.

As example, the pilot signals are transferred with a periodical rate of few milliseconds. The periodicity is determined either by the first or the second telecommunication device. When it is determined by the second telecommunication device 10, the second telecommunication device transfer to the first telecommunication device 20, the periodicity that the first telecommunication device 20 has to use.

In a variant, the pilot signals are transferred when at least one of the power $I_l$, with $l$=1 to at most $L$, obtained at step S400 varies a lot from the previously obtained power $I_l$ of the interference components, as example if there is more than twenty percents of variation. In another example, the pilot signals are transferred when the channel response of the downlink channel between the first and second telecommunication devices varies a lot, as example if there is more than twenty percents of variation. The channel response is measured from pilot signals transferred by the second telecommunication device 10 and measured by the first telecommunication device 20.

The channel response reflects variation of the channel which are due to multipath fading and/or shadowing.

If it isn't time to transfer pilot signals to the second telecommunication device 10, the processor 200 moves to step S400 and executes the loop constituted by the steps S400 to S403.

If it is time to transfer pilot signals to the second telecommunication device 10, the processor 200 moves to step S404.

At step S404, the processor 200 commands the transfer, by the channel interface 205 of $L$ uplink pilot signals

$$s_l(p) = \sqrt{\frac{\eta}{I_l}} r_l(p)$$ , with $l$=1 to at most $L$, in each of respective $l$=1 to at most $L$ frequency subbands.

It has to be noted here that, each first telecommunication device 20k uses preferably and in a non limitative way, different pilot symbols. These pilots symbols are orthogonal.

At next step S405, the processor 200 checks whether or not it is time to transfer the power information $\eta$ to the second telecommunication device 10. As example, the power information $\eta$ is transferred with a periodicity of few hundred milliseconds.

The periodicity is determined either by the first or the second telecommunication device. When it is determined by the second telecommunication device 10, the second telecommunication device transfer to the first telecommunication device 20 the periodicity that the first telecommunication device 20 has to use.

In a variant, the pilot signals are transferred when the average $\dfrac{1}{L}\displaystyle\sum_{l=1}^{L}\dfrac{1}{I_l}$ of the inverse of the power $I_l$, with $l$=1 to at most $L$, obtained at step S400 varies a lot from the average of the previously obtained average of the power $I_l$ of the interference components, as example if there is more than twenty percents of variation or when the long term averaged channel response of the downlink channel varies a lot, as example if there is more than twenty percents of variation with the long term averaged channel response of the downlink channel previously measured. The long term averaged channel response is determined from plural measure of pilot signals received by the first telecommunication device 20 and transferred by the second telecommunication device 10.

The long term averaged channel response reflects variation of the channel which are due to, as example, the displacement of the first telecommunication device.

It should be noted here that has the pilots symbols are weighted by the inverse of the root of the power $I_l$, with $l$=1 to at most $L$, a significant modification of $I_l$ changes significantly the transmission power of the pilot signals.

If it isn't time to transfer the power information $\eta$ to the second telecommunication device 10, the processor 200 moves to step S400 and executes the loop constituted by the steps S400 to S405.

If it is time to transfer the power information $\eta$ to the second telecommunication device 10, the processor 200 moves to step S406.

At next step S406, the processor 200 obtains the power information $\eta$ which is representative of the transmit power.

The processor 200 calculates the power information $\eta$ so that the second telecommunication device 10 receives a constant average power noted $P_0$.

The power information $\eta$ is preferably and in a non limitative way calculated according to the following formula:

$$\eta = \frac{P_{DL}P_0}{\dfrac{1}{(t_0 - t_1 + 1)L}\displaystyle\sum_{t=t_1}^{t_0}\sum_{l=1}^{L}P_{DL}\dfrac{|h_l(t)|^2}{I_l(t)}}$$

derived from

$$P_0 = \frac{1}{(t_0 - t_1 + 1)L}\displaystyle\sum_{t=t_1}^{t_0}\sum_{l=1}^{L}\frac{\eta}{I_l(t)}|h_l(t)|^2$$

where $P_{DL}$ is the power of the pilot signals transferred by the second telecommunication device 10 to the first telecommunication 20, $t_0$ is the time index where it is decided to send pilot symbols, $t_1$ is the time index when the previous pilot symbols have been sent or is equal to $t_1 = t_0 - \Delta_t$, where $\Delta_t$ is a predetermined value , $h_l(t)$ is the channel response coefficient of the $l$-th frequency subband determined at the instant $t$ by the first telecommunication device 20k from pilot signals received from the second telecommunication device 10 and $I_l(t)$ is the power of interference components at the instant $t$.

At next step S407, the processor 200 transfers the power information $\eta$ to the channel interface 205 which transfers at least a signal representative of the power information $\eta$ to the second telecommunication 10.

At next step S408, the processor 200 memorises the power information $\eta$ in that RAM memory 203.

According to the invention, the SINR reporting is achieved by transmitting the pilot signal with a power which is inverse proportional to the interference power $I_l$ at a rate which is shorter than the rate of the power information $\eta$ reporting.

**Fig. 4b** is a second algorithm executed by the first telecommunication device which is used in the first telecommunication system according to a second mode of realisation of the present invention.

The present algorithm is more precisely executed by each of the first telecommunication devices $20_l$ to $20_K$.

At step S450, the processor 200 obtains from the channel interface 205 the power $I_l$, with $l$=1 to at most $L$, of the interference components received by the first telecommunication device $20_k$ in the at most $L$ respective frequency subbands.

In a variant, the processor 200 sets the value of $I_l$, with $l$=1 to at most $L$, to one.

At next step S451, the processor 200 reads in the RAM memory 203, the power information $\eta$.

At next step S452, the processor 200 commands the transfer of each of the weighting coefficients $\sqrt{\eta/I_l}$ to the channel interface 205.

At next step S453, the processor 200 checks whether or not it is time to transfer pilot signals to the second telecommunication device 10 on a similar way as the one disclosed at step S403 of the Fig. 4a.

If it isn't time to transfer pilot signals to the second telecommunication device 10, the processor 200 moves to step S450 and executes the loop constituted by the steps S450 to S453.

If it is time to transfer pilot signals to the second telecommunication device 10, the processor 200 moves to step S454.

At step S454, the processor 200 commands the transfer, by the channel interface 205 of $L$ uplink pilot signals

$$s_l(p) = \sqrt{\frac{\eta}{I_l}} r_l(p) \text{ , with } l=1 \text{ to at most } L.$$

If the value $I_l$, with $l$=1 to at most $L$, is equal to one, the processor 200 commands the transfer, by the channel interface 205 of $L$ uplink pilot signals $s_l(p) = \sqrt{\eta} r_l(p)$ , with $l$=1 to at most $L$, in each of respective $l$=1 to at most $L$ frequency subbands. These $L$ uplink pilot signals have then the same transmission power in each frequency subband.

It has to be noted here that, each first telecommunication device 20k uses preferably and in a non limitative way, different pilot symbols. These pilots symbols are orthogonal.

At next step S455, the processor 200 checks whether or not a message representative of a request of an update of the power information $\eta$ has been received by the channel interface 205. The message representative of a request of an request of the power information $\eta$ is transferred by the second telecommunication device 10 as it will be disclosed hereinafter.

If such message is not received, the processor 200 moves to step S450 and executes the loop constituted by the steps S450 to S455.

If such message is received, the processor 200 moves to step S456.

At step S456, the processor 200 checks whether or not the message representative of a request of an update of the power information $\eta$ comprises an information representative of an increase or a decrease command of the power information $\eta$.

If the message representative of a request of an update of the power information $\eta$ comprises an information representative of an increase or a decrease command of $\eta$ , the processor 200 moves to step S457, otherwise the processor 200 moves to step S459.

At step S457, the processor 200 adjusts the power information $\eta$ . If the information is representative of an increase, the processor 200 increases the power information $\eta$ stored in the RAM memory 203 by one decibel, if the information is representative of a decrease, the processor 200 decreases the power information $\eta$ stored in the RAM memory 203 by one decibel.

At next step S458, the processor 200 memorises the modified power information $\eta$ in that RAM memory 203.

Then processor 200 moves then to step S461.

At step S461, the processor 200 checks whether or not it is time to transfer the power information $\eta$ to the second telecommunication device 10. As example, the power information $\eta$ is transferred with a periodicity of few seconds.

The periodicity is determined either by the first or the second telecommunication device as it has been disclosed at step S405 of the Fig. 4a.

If it isn't time to transfer the power information $\eta$ to the second telecommunication device 10, the processor 200 moves to step S450 and executes the present algorithm as it has been already disclosed.

If it is time to transfer the power information η to the second telecommunication device 10, the processor 200 moves to step S462.

At step S462, the processor 200 transfers the power information η to the channel interface 205 which transfers at least a signal representative of the power information η to the second telecommunication 10.

Such transfer enable the first and the second telecommunication devices to synchronise over a long period of time the power information η.

After that, the processor 200 moves to step S450 and executes the present algorithm as it has been already disclosed.

At step S459, the processor 200 checks whether or not the message representative of a request of an update of the power information η comprises a value of the power information η .

If the message representative of a request of an update of the power information η comprises a value of the power information η, the processor 200 moves to step S460, otherwise the processor 200 moves to step S463.

At step S460, the processor 200 memorises the power information η in the RAM memory 203. After that, the processor 200 moves to step S461 already described.

At step S463 the processor 200 calculates the power information η as it has been disclosed at step S406 of the Fig. 4a.

At next step S464, the processor 200 transfers the power information η to the channel interface 205 which transfers at least a signal representative of the power information η to the second telecommunication 10.

At next step S465, the processor 200 memorises the power information η in that RAM memory 203.

After that, the processor 200 returns to step S450.

Preferably, the SINR reporting is achieved by transmitting the pilot signal with a power which is inverse proportional to the interference power $I_l$ at a rate which is shorter than the rate of the power information η reporting.

According to a variant of the invention, the reporting of power of the signals received by the first telecommunication device is achieved by transmitting the pilot signal weighted by the power coefficient $\sqrt{\eta}$ .

**Fig. 5a** is a first algorithm executed by the second telecommunication device which is used in the first telecommunication system according to the first mode of realisation of the present invention.

At step S500, the pilot signals transferred at step S404 by the first telecommunication devices $20_l$ to $20_K$, are received through the channel interface 305 of the second telecommunication device 10.

In the reciprocal TDD system, the $p$-th symbol transferred by a first telecommunication device $20_k$ in the $l$-th subband and received by the second telecommunication device 10 is expressed as :

$$x_{BS,l}(p) = \sqrt{\frac{\eta}{I_l}}h_l r_l(p) + z_{BS,l}(p)$$ where $z_{BS,l}(p)$ is the interference component of the second telecommunication device 10 in the $l$-th frequency subband.

At next step S501, the processor 300 checks if a message comprising a power information η has been received through the channel interface 305. Such message is as the one transferred at step S407 of the Fig. 4a.

If a message comprising a power information η has been received through the channel interface 305, the processor 300 moves to step S502 and memorises the received a power information η in the RAM memory 303 and moves after to step S503.

If no message comprising a power information η has been received through the channel interface 305, the processor 300 moves to step S503.

At step S503, the processor 300 reads the last memorised power information η.

At next step S504, the processor 300 estimates the SINR of the first telecommunication devices 20 in each frequency subband. The number of frequency subbands can either equal to one to $L$.

Using the power information η read at step S503, and the second telecommunication device 10 transmit power $P_{BS,l}$ in the $l$-th subband, the second telecommunication device 10 predicts the SINR of each of the first telecommunication $20_k$ in the $l$-th frequency subband as :

$$\gamma_l^{(pre)} = P_{BS,l} \frac{\left|x_{BS,l}(p)\right|^2}{\eta}$$

If the uplink pilot signal in the $l$-th frequency subband is composed of $p_l$ symbols, with $p_l > 1$, the SINR prediction

is given by:

$$\gamma_l^{(pre)} = \frac{P_{BS,l}}{\eta P_{ref}} \left| \frac{1}{P_1} \sum_{p=1}^{P_1} x_{BS,l}(p) r_l(p)^* \right|^2$$

where * denotes the complex conjugate.

In ideal condition with $z_{A,l}(p) = 0$, we have $\gamma_l^{(pre)} = P_{BS,l} \dfrac{|h_l|^2}{I_l}$ which corresponds theoretically to the SINR of the first telecommunication device $20_k$.

If the value $I_l$, with $l=1$ to at most $L$, is forced to one, we have $\gamma_l^{(pre)} = P_{BS,l} |h_l|^2$ which corresponds to the power of the received signals by the first telecommunication device $20_k$.

At next step S505, the processor 300 determines the modulation and coding scheme to be used for the transfer of signals representative of groups of date to each first telecommunication device $20_k$ in the respective subbands using the determined SINR in each subbands or according to the power of the received signals by the first telecommunication device $20_k$.

In a variant of realisation, the processor 300, using the determined SINR in each subband or the power information $\eta$, determines the transmission power $P_{Bs,l}$ in each subband in order to adjust the SINR $\gamma_l^{(pre)}$ to a predetermined value.

In another variant of realisation, the processor 300 determines, using the determined SINR for all the first telecommunication devices $20_l$ to $20_K$ or the power information $\eta$, the first telecommunication device 20 to which signals representative of a group of data have to be sent.

In another variant of realisation, the processor 300 determines from the received pilot signals in the uplink channel, an information enabling the process of a group of data received from the first telecommunication device.

The information is, as example and in a non limitative way, the phase of the pilot signals which is used to compensate the phase rotation on the signals representative of groups of data received from that first telecommunication device $20_k$.

After that, the processor 300 returns to step S500.

**Fig. 5b** is a second algorithm executed by the second telecommunication device which is used in the first telecommunication system according to the second mode of realisation of the present invention.

At step S550, the signals transferred at step S454 by the first telecommunication devices $20_l$ to $20_K$, are received through the channel interface 305 of the second telecommunication device 10.

The signals are as the one disclosed at step S500 of the Fig. 5a.

At next step S551, the processor 300 checks if the power of the received signal in each frequency subband is acceptable. The power of the received signal in each frequency subband is acceptable if it is not too low in comparison with the interference component of the second telecommunication device 10 in that $l$-th frequency subband or the power of the received signal in each frequency subband is acceptable if the power is not upper than a predetermined value.

If the power of the received signal in each frequency subband is acceptable, the processor 300 moves to step S556. If the power of the received signal in at least one each frequency subband is not acceptable, the processor 300 moves to step S552.

At next step S556, the processor 300 estimates the SINR of the first telecommunication devices 20 in each frequency subband. The number of frequency subbands can either equal to one to $L$.

Using the power information $\eta$ read at step S556, and the second telecommunication device 10 transmit power $P_{BS,l}$ in the $l$-th subband, the second telecommunication device 10 predicts the SINR of each of the first telecommunication $20_k$ in the $l$-th frequency subband as :

$$\gamma_l^{(pre)} = P_{BS,l} \frac{|x_{BS,l}(p)|^2}{\eta}$$

In ideal condition with $z_{A,l}(p) = 0$, we have $\gamma_l^{(pre)} = P_{BS,l} \dfrac{|h_l|^2}{I_l}$ which corresponds theoretically to the SINR of the first telecommunication device $20_k$.

If the value of $I_l$, with $l$=1 to at most $L$, is forced to one value, we have $\gamma_l^{(pre)} = P_{BS,l} |h_l|^2$ which corresponds to the power of the received signals by the first telecommunication device $20_k$.

At next step S558, the processor 300 determines the modulation and coding scheme to be used for the transfer of signals representative of groups of date to each first telecommunication device $20_k$ in the respective subbands using the determined SINR in each subbands or using the determined power of the received signals by the first telecommunication device $20_k$.

In a variant of realisation, the processor 300, using the determined SINR in each subbands or using the determined power of the received signals by the first telecommunication device $20_k$, determines the transmission power $P_{BS,l}$ in each subband in order to adjust the SINR $\gamma_l^{(pre)}$ to a predetermined value.

In another variant of realisation, the processor 300 determines, using the determined SINR for all the first telecommunication devices $20_l$ to $20_K$, or using the determined power of the received signals by the first telecommunication device $20_k$, the first telecommunication device 20 to which signals representative of a group of data have to be sent.

In another variant of realisation, the processor 300 determines from the received pilot signals in the uplink channel, an information enabling the process of a group of data received from the first telecommunication device as it has been disclosed at step S505 of the Fig. 5a.

After that, the processor 300 returns to step S550.

At step S552, the processor 300 commands the transfer of a message representative of a request of an update of the power information $\eta$ to the first telecommunication 20 which sent the pilot signals. The message representative of a request of an update of the power information $\eta$ comprises an information representative of an increase or a decrease command of $\eta$ or the message representative of a request of an update of the power information $\eta$ .

At next step S553, the processor 300 checks if a message comprising a power information $\eta$ value is received through the channel interface 305. Such message is as the one transferred at step S462 or S464 of the Fig. 4b.

If a message comprising a power information $\eta$ has been received through the channel interface 305, the processor 300 moves to step S555, memorises the received power information $\eta$ in the RAM memory 303 and moves after to step S550.

If no message comprising a power information $\eta$ has been received through the channel interface 305, the processor 300 moves to step S554, memorises the power information $\eta$ which corresponds to the one transferred at step S552 and moves after to step S550. Such case occurs when the first telecommunication device 20 which receives the message representative of a request of an update of the power information $\eta$ doesn't transfer at least a signal representative a power information $\eta$ to the second telecommunication 10 for a synchronisation over a long period of time as it has been disclosed at step S462.

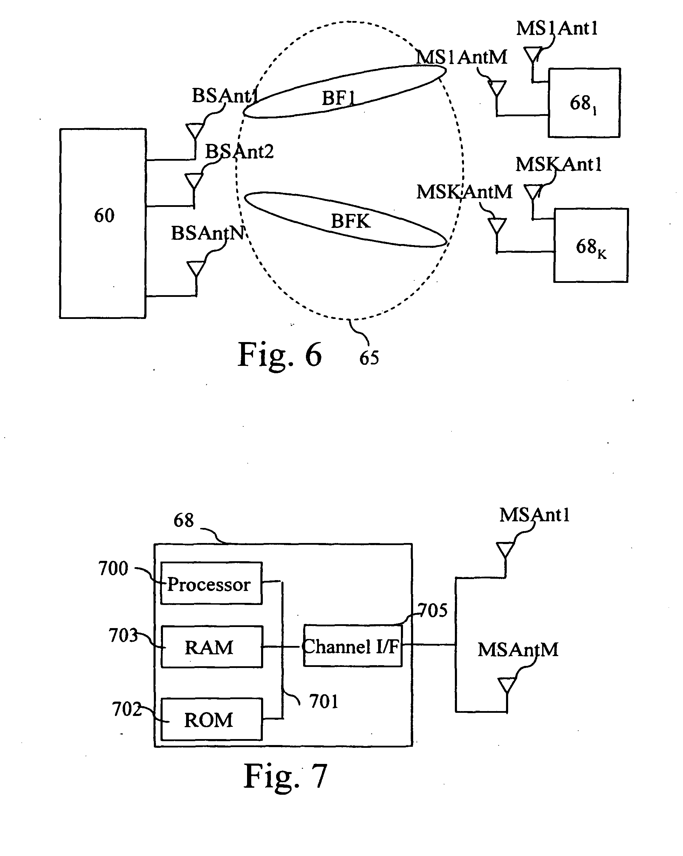

**Fig. 6** is a diagram representing the architecture of a second telecommunication system in which the present invention is implemented.

In the second telecommunication system of the Fig. 6, at least one first telecommunication device $68_k$, with $k$=1 to K, is linked through a wireless network 65 to a second telecommunication device 60 using an uplink and a downlink channel.

Preferably, and in a non limitative way, the second telecommunication device 60 is a base station or a node of the wireless network 65. The first telecommunication devices $68_l$ to $68_K$ are as example and in a non limitative way terminals like mobile phones or a personal digital assistants or personal computers.

The second telecommunication system is a wireless telecommunication system which uses OFDMA in combination with TDD and MIMO schemes. The signals transferred in uplink and downlink channels are duplexed in different time periods of same frequency bands. In an OFDMA scheme, the overall system bandwidth is partitioned into $L$ plural orthogonal frequency subbands, which are also referred to as frequency bins or subchannels. With OFDMA, each frequency subband is associated with subcarriers upon which data may be modulated. The channel responses between the uplink and downlink channels of the telecommunication network 65 are reciprocal.

Reciprocal means that if the downlink channel conditions are represented by a downlink matrix the uplink channel conditions can be expressed by an uplink matrix which is the transpose of the downlink matrix.

The second telecommunication device 60 transfers signals representatives of a group of data to the first telecommunication devices $68_l$ to $68_K$ through the downlink channel and the first telecommunication devices $68_l$ to $68_K$ transfer signals to the second telecommunication device 60 through the uplink channel.

The signals transferred by the first telecommunication devices $68_l$ to $68_K$ are signals representatives of a group of data and/or pilot signals which are weighted by at least a weight determined from the interference components measured by the first telecommunication devices $68_I$ to $68_K$.

A group of data is as example a frame constituted at least by a header field and a payload field which comprises classical data like data related to a phone call, or a video transfer and so on.

Pilot signals are predetermined sequences of symbols known by the telecommunication devices. Pilot signals are as example and in a non limitative way Walsh Hadamard sequences.

The second telecommunication device 60 has at least one antenna and more preferably $N$ antennas noted BSAnt1 to BSAntN. The second telecommunication device 60 preferably controls the spatial direction of the signals transferred to each of the first telecommunication devices 68 according to at least signals transferred by the first telecommunication devices $68_I$ to $68_K$ as it will be disclosed hereinafter.

More precisely, when the second telecommunication device 60 transmits signals representatives of a group of data to a given first telecommunication device $68_k$ through the downlink channel, the signals are at most $L*N$ times duplicated and each duplicated signal is weighted, i.e. multiplied, by an element of a downlink weighting vector $w_{n,l}$, with $n$=1 to at most $N$, of the second telecommunication device 60. As a result, the second telecommunication device 60 performs beamforming, i.e. controls the spatial direction of the transmitted signals.

The ellipse noted BF1 in the Fig. 6 shows the pattern of the radiated signals by the antennas BSAnt1 to BSAntN which are transferred to the first telecommunication device $68_I$ by the second telecommunication device 60.

The ellipse noted BFK in the Fig. 6 shows the pattern of the radiated signals by the antennas BSAnt1 to BSAntN which are transferred to the first telecommunication device $68_K$ by the second telecommunication device 60.

The first telecommunication devices $68_I$ to $68_K$ have $M$ antennas noted respectively MS1Ant1 to MS1AntM and MSKAnt1 to MSKAntM. It has to be noted here that the number $M$ of antennas may vary according to each first telecommunication device $68_k$ with k=1 to K. Each first telecommunication device $68_I$ to $68_k$ controls the spatial direction of the signals transferred to the second telecommunication device 60 as it will be disclosed hereinafter.

Each first telecommunication device $68_k$ transfers, through the antennas MSkAnt1 to MSkAntM, signals to be transmitted to the second telecommunication device 60. More precisely, when the first telecommunication device $68_k$ transmits signals to the second telecommunication device 60 through the uplink channel, the signals are at most $L*M$ times duplicated and each duplicated signal is weighted, i.e. multiplied, by an elements of uplink weighting vectors $g_{m,l}$ with $l$=1 to $L$, with $m$=1 to at most $M$ of the first telecommunication device $68_k$. As a result, each first telecommunication device $68_k$ performs beamforming, i.e. controls the spatial direction of the transmitted signals.

The ellipse noted BF 1 in the Fig. 6 shows the pattern of the radiated signals by the antennas MS1Ant1 to MS1AntM which are transferred by the first telecommunication device $68_I$ to the second telecommunication device 60.

The ellipse noted BFK in the Fig. 6 shows the pattern of the radiated signals by the antennas MSKAnt1 to MSKAntM which are transferred by the first telecommunication device $68_K$ to the second telecommunication device 60.

**Fig. 7** is a diagram representing the architecture of a first telecommunication device which is used in the second telecommunication system.

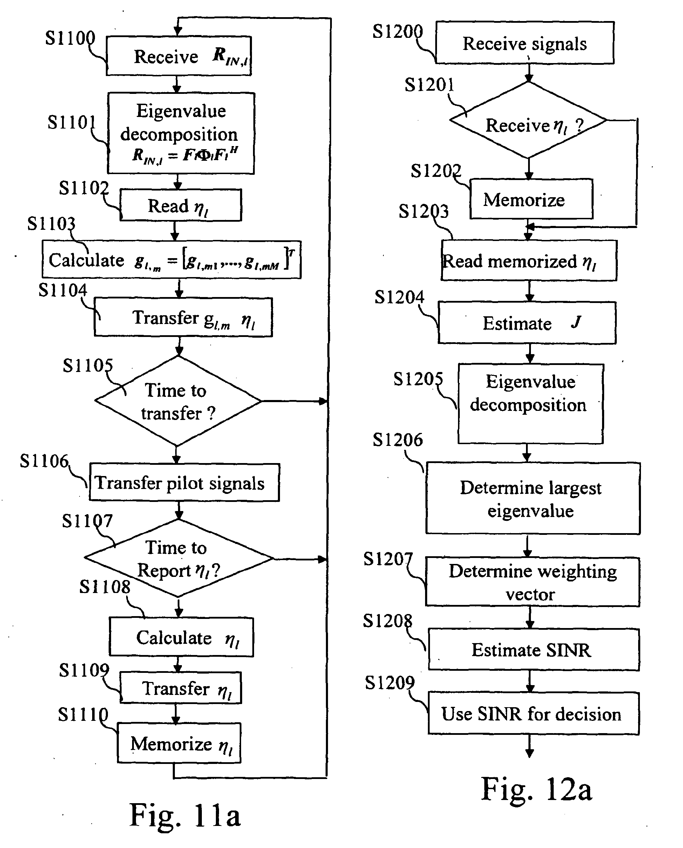

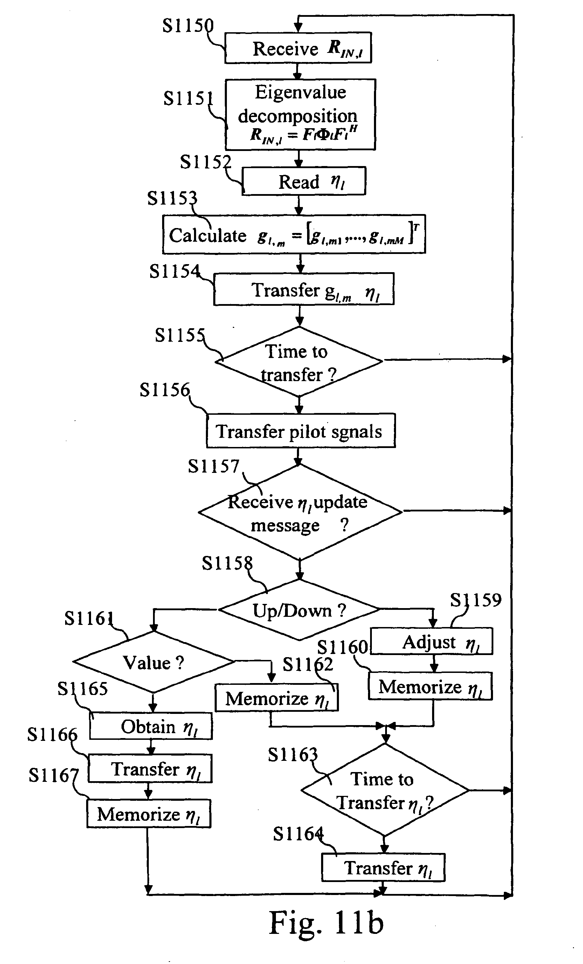

The first telecommunication device 68, as example the first telecommunication device $68_k$ with $k$ comprised between 1 to $K$, has, for example, an architecture based on components connected together by a bus 701 and a processor 700 controlled by programs related to the algorithms as disclosed in the Figs. 11a and 11b.

It has to be noted here that the first telecommunication device 68 is, in a variant, implemented under the form of one or several dedicated integrated circuits which execute the same operations as the one executed by the processor 700 as disclosed hereinafter.

The bus 701 links the processor 700 to a read only memory ROM 702, a random access memory RAM 703 and a channel interface 705.

The read only memory ROM 702 contains instructions of the programs related to the algorithms as disclosed in the Figs.11a and 11b which are transferred, when the first telecommunication device $68_k$ is powered on to the random access memory RAM 703.

The RAM memory 703 contains registers intended to receive variables, and the instructions of the programs related to the algorithms as disclosed in the Figs. 11a and 11b.

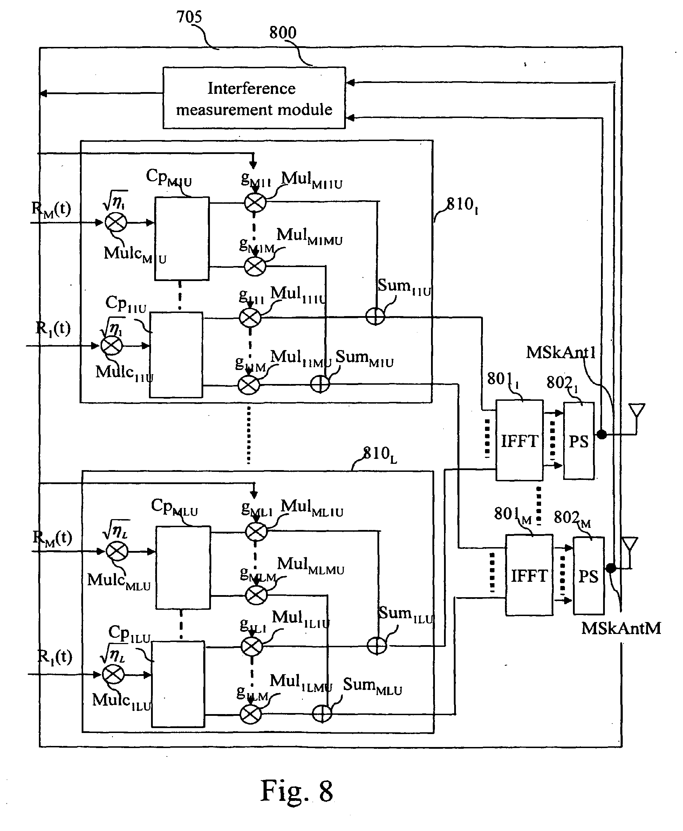

The channel interface 705 comprises means for measuring the interference components measured by the first telecommunication device $68_k$, means for weighting the pilot signals to be transferred to the second telecommunication device 60 by at least a power coefficient $\sqrt{\eta_l}$ with $l$=1 to $L$, means for weighting the weighted pilot signals to be transferred to the second telecommunication device 60 by weighting vectors $g_{m,l}$, with $m$=1 to $M$, and means for transferring at least a power information $\eta_l$ to the second telecommunication device 60. The channel interface 705 will be described in more detail in reference to the Fig. 8.

According to the present invention, the processor 700 determines, from the interference components measured by the first telecommunication device $68_k$, at most $M*L$ uplink weighting vectors $g_{m,l}$ to be used for weighting respectively at most $M*L$ pilot signals to be transferred to the second telecommunication device 60 and determines a single power coefficient $\eta$ or a power coefficient $\eta_l$ for each of the $l$=1 to at most $L$ subbands to be used for weighting at most $M$ pilot signals to be transferred to the second telecommunication device 60.

**Fig. 8** is a diagram representing the architecture of a channel interface of the first telecommunication device which is used in the second telecommunication system.

The channel interface 705 comprises preferably an interference measurement module 800 which measures the interference components measured by the first telecommunication device $68_k$.

The interference measurement module 800 determines the interference correlation matrices $R_{IN,l}$ ,with $l$=1 to $L$, of the first telecommunication device $68_k$ which are respectively representative of the interferences components measured in each of the $l$= 1 to $L$ frequency subbands of the MIMO-OFDMA system.

When the second telecommunication device 60 transfers, in each of the $L$ frequency subbands, $N$ signals

$$s_{l,1}(p),...,s_{l,N}(p) \quad \left( E \left| s_{l,n}(p) \right|^2 \right] = 1 \text{,}$$ with $n$=1 to $N$, the $p$-th signal $x_l(p)$ received by the first telecommunication

device $68_k$ in the $l$-th frequency subband is equal to $x_l$ $$x_l(p) = H_l \sqrt{P_{BS,j}} s_l(p) + z_l(p) \text{,}$$

where $s_l(p) = [s_{l,1}(p),..., s_{l,N}(p)]^T$ , $z_l(p) = [z_{l,1}(p),..., z_{l,M}(p)]^T$ is the interference plus noise vector of the first telecommunication $68_k$ in the $l$-th frequency subband, $H_l$ is the $M*N$ MIMO channel matrix in the $l$-th frequency subband and $^T$ denotes the transpose.

The interference measurement module 800 determines the interference correlation matrices $RI_{N,l}$ by averaging

$$z_l(p) z_l^H(p)$$ over a large number of samples. Then, $$E \left[ z_l(p) z_l^H(p) \right] = R_{IN,l} \text{.}$$

In a variant of realisation, the interference correlation matrices $R_{IN,l}$ is forced to the identity matrix.

The channel interface 705 comprises $L$ pilot signals processing devices noted $801_l$ to $810_L$, $M$ Inverse Fast Fourier Transform module (IFFT) noted $801_l$ to $801_M$ which make an inverse fast Fourier transform and $M$ parallel to serial converters noted $802_l$ to $802_M$ which converted the $M$ inversed Fourier transformed signals into signals transferred to the respective antennas MSkAnt1 to MSkAntM.

The channel interface 705 further comprises means for transferring at least a power information $\eta_l$, to the second telecommunication device 60.

Each pilot signals processing device $801_l$, with $l$=1 to $L$ comprises $M$ means for weighting $M$ pilot signals noted $R_l(t)$ to $R_M(t)$ to be transferred to the second telecommunication device 60 by a weighting coefficient $\sqrt{\eta_l}$ . These means are noted $Mulc_{IIU}$ to $Mulc_{MIU}$ in the Fig. 8. Each pilot signals processing device 810 comprises $M$ duplication modules noted $Cp_{IIU}$ to $CP_{MIU}$ which duplicate the weighted pilot symbols and means for weighting the duplicated pilot signals to be transferred to the second telecommunication device 60 by weighting vectors $g_{m,l}$. The means for weighting the weighted pilot signals to be transferred to the second telecommunication device 60 are composed of, $M*M$ uplink multiplication modules noted $Mul_{IIIU}$ to $Mul_{MIMU}$, $M$ uplink summation modules noted $Sum_{IIU}$ to $Sum_{MIU}$.

Each duplicated pilot signal is weighted by the elements of a uplink weighting vector $g_{m,l}$ with $m$=1 to $M$, determined by the processor 700.

The signals weighted by the first element of each uplink weighting vector $g_{m,l}$ are then summed by the adder $Sum_{IIU}$ and transferred to the IFFT module $801_1$. The signals weighted by the second element of each uplink weighting vector $g_{m,l}$ are then summed and transferred to the IFFT module $801_2$ and so on until the $M$-th element of the weighting vectors $g_{m,l}$.

It has to be noted here that the signals are, prior to be transferred to each antenna MSkAnt1 to MSkAntM, frequency up converted, mapped and so on, as it is done in classical wireless telecommunication devices.

It has to be noted here that, less than $M$ pilot signals, as example $M'$ pilot signals with $M' \le M$, can be transferred to the second telecommunication 60 as it will be disclosed hereinafter. In such case, $M$-$M'$ pilot signals are set to null value and/or their corresponding weighting vectors $g_{m,l}$ are also set to null value.

It has to be noted here that the pilot signals transferred in each frequency subband are preferably identical, but we can understand that the pilot symbols used in a frequency subband can be different from the used in another or the other frequency subbands.

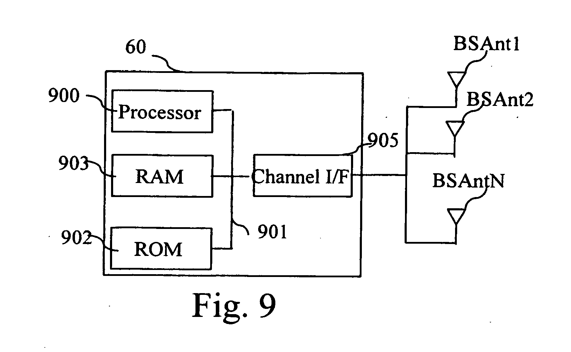

**Fig. 9** is a diagram representing the architecture of a second telecommunication device which is used in the second telecommunication system.

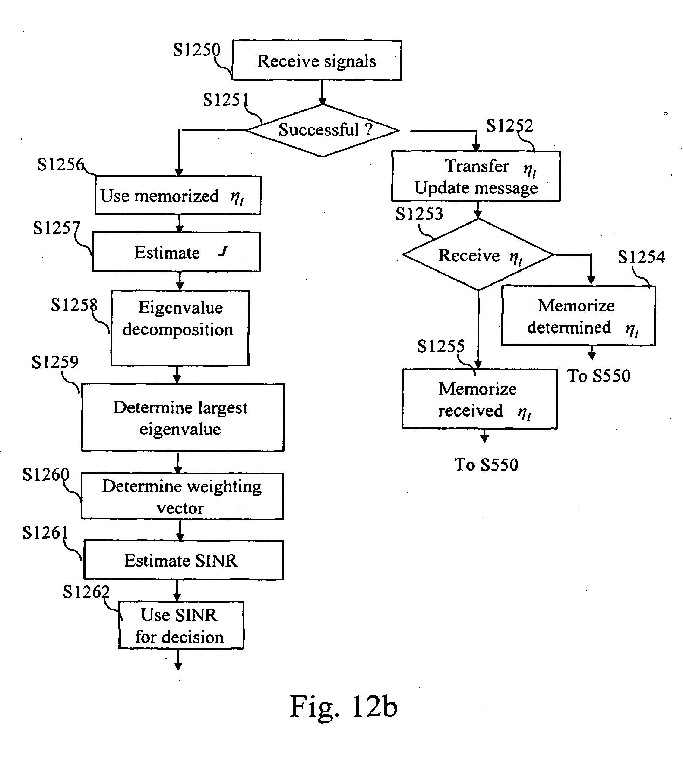

The second telecommunication device 60 has, for example, an architecture based on components connected together by a bus 901 and a processor 900 controlled by programs related to the algorithm as disclosed in the Figs. 12a and 12b.

It has to be noted here that the second telecommunication device 60 is, in a variant, implemented under the form of one or several dedicated integrated circuits which execute the same operations as the one executed by the processor 900 as disclosed hereinafter.

The bus 901 links the processor 900 to a read only memory ROM 902, a random access memory RAM 903 and a channel interface 905.

The read only memory ROM 902 contains instructions of the programs related to the algorithm as disclosed in the Figs. 12a and 12b which are transferred, when the second telecommunication device 60 is powered on to the random access memory RAM 903.

The RAM memory 903 contains registers intended to receive variables, and the instructions of the programs related to the algorithm as disclosed in the Figs. 12a and 12b.

According to the third and fourth modes of realisation of the present invention, the processor 900 is able to determine from at least signals transferred by the first telecommunication device $68_k$ which are representative of pilot signals weighted weighting coefficients $\sqrt{\eta_l}$ and $g_{l,m}$ in each of the $l=1$ to $L$ frequency subbands of the OFDMA system and a power information $\eta$ or power information $\eta_l$, the modulation and coding scheme for transferring signals representative of group of data to that first telecommunication device $68_k$ and/or to determine the first telecommunication device $68_k$ to which signals representative of a group of data have to be sent according to signals transferred by the first telecommunication devices 60.

The processor 900 is also able to determine, from at least signals transferred by each first telecommunication device $68_l$ to $68_K$ which are representative of pilot signals weighted by the power coefficients $\sqrt{\eta_l}$ and uplink weighting vectors representative of the interference components received by the first telecommunication device $68_k$ which has transferred the signals, the downlink weighting vectors $w_{n,l}$ to be used by the second telecommunication device 60 when it transfers signals to the first telecommunication device $68_k$ which has transferred the signals.

According to the third and fourth mode of realisation of the present invention, the channel interface 905 comprises means for receiving a power information $\eta$ or plural power information $\eta_l$ from each second telecommunication device 68.

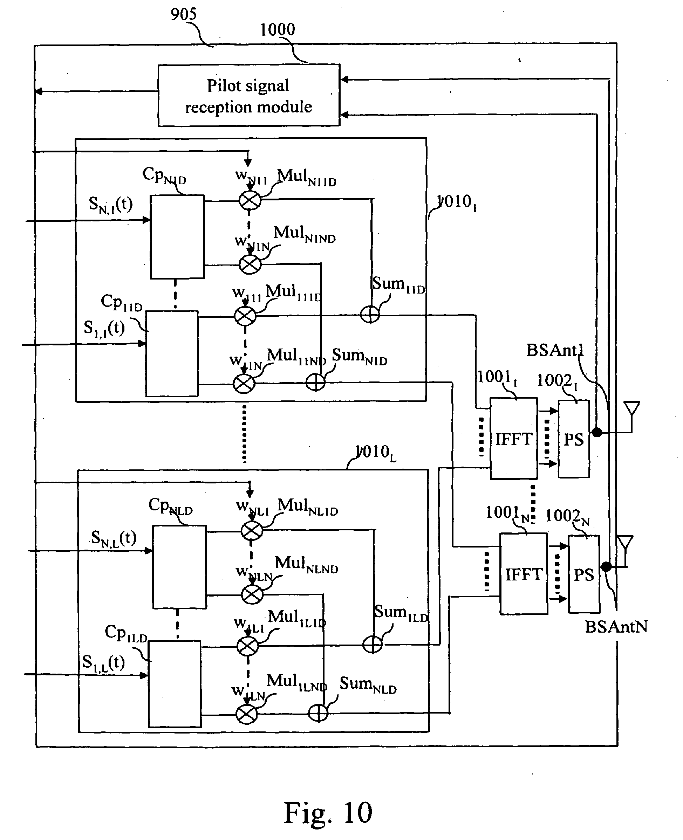

The channel interface 905 comprises means for receiving weighted pilot signals from each first telecommunication device $68_l$ to $68_K$, means for receiving, from each first telecommunication device $68_l$ to $68_K$, a power information $\eta_l$ for each frequency subband or a single power information $\eta$ for all of the frequency subbands. The channel interface 905 comprises means for directing, using the downlink weighting vectors $w_{n,l}$, the signals representatives of groups of data transferred by the second telecommunication device 60 to a first telecommunication device $68_l$ to $68_K$. The channel interface 905 will be disclosed in more details in reference to the Fig. 10.

**Fig. 10** is a diagram representing the architecture of a channel interface of the second telecommunication device which is used in the second telecommunication system.

The channel interface 905 of the second telecommunication device 60 comprises a pilot signal reception module 1000.

The pilot signal reception module 1000 comprises means for receiving pilot signals weighted according the present invention by the first telecommunication devices $68_l$ to $68_K$ and a power information $\eta_l$ for each frequency subband or a single power information for all of the frequency subbands from each of the first telecommunication devices $68_l$ to $68_K$.

The channel interface 905 comprises $L$ signals processing devices noted $1010_1$ to $1010_L$, $N$ IFFT modules noted $1001_1$ to $1001_N$ and $N$ parallel to serial converters noted $1002_1$ to $1002_N$ which converted the $N$ inversed Fourier transformed signals into signals transferred to the respective antennas BSAnt1 to BSAntN.

Each signals processing device $1010_1$, with $l=1$ to $L$, comprises $N$ duplication modules noted $C_{PIID}$ to $CP_{NID}$ which duplicate the signals representative of a group of data and means for weighting the duplicated signals to be transferred to the first telecommunication devices 68 by weighting vectors $w_{n,l}$. The means for weighting the weighted signals to be transferred to the first telecommunication devices 68 are composed of, $N*N$ downlink multiplication modules noted $Mul_{IIID}$ to $Mul_{NIND}$, $N$ downlink summation modules noted $Sum_{IID}$ to $Sum_{NID}$.

Each duplicated signal is weighted by the elements of a downlink weighting vector $w_{n,l}$ with $n=1$ to $N$, determined by the processor 900.

The signals weighted by the first element of each uplink weighting vector $w_{n,l}$ are then summed by the adder $Sum_{IID}$ and transferred to the IFFT module $1001_l$. The signals weighted by the second element of each uplink weighting vector $w_{n,l}$ are then summed and transferred to the IFFT module $1001_2$ and so on until the $N$-th element of the weighting vectors $w_{n,l}$.

It has to be noted here that the signals are, prior to be transferred to each antenna BSAnt1 to BSAntN, frequency up converted, mapped and so on, as it is done in classical wireless telecommunication devices.

It has to be noted here that, less than $N$ groups of data, as example $N'$ with $N' \leq N$, can be transferred to the first telecommunication devices 68 as it will be disclosed hereinafter.

In such case, the signals representative of $N$-$N'$ groups of data are set to null value and/or their corresponding weighting vectors $w_{n,l}$ are also set to null value.

**Fig. 11a** is a first algorithm executed by the first telecommunication device which is used in the second telecommunication system according to a third mode of realisation of the present invention.

The present algorithm is more precisely executed by each of the first telecommunication devices $68_l$ to $68_K$.

At step S1100, the processor 700 receives from the interference measurement module 800 of the channel interface 705, the interference correlation matrices $R_{IN,l}$ ,with $l$=1 to $L$, of the first telecommunication device $68_k$ which are respectively representative of the interferences generated by any other electric devices in each of the $l$= 1 to $L$ frequency subbands of the MIMO-OFDM system.

In a variant, the processor 700 forces the interference correlation matrices $R_{IN,l}$ to the identity matrix.

At next step S1101, the processor 700 executes an eigenvalue decomposition of each of the interference correlation matrices $R_{IN,l}$ . $R_{IN,l} = F_l \Phi_l F_l^H$ , where $\Phi$, and $F_l$ are $M*M$ diagonal and unitary matrices respectively.

If the interference correlation matrices $R_{IN,l}$ is forced to the identity matrix, $\Phi$, and $F_l$ are also equal to the identity matrix.

At next step S 1102, the processor 700 reads in the RAM memory 703 a power information $\eta_l$ for the $l$-th frequency subband with $l$=1 to $L$ or a power information $\eta$ used for all of the frequency subbands.

At next step S 1103, the processor 700 calculates the uplink' weighting vectors $g_{l,m} = [g_{l,,ml},...,g_{l,mM}]^T$, with $m$=1 to $M$ and $l$=1 to $L$ using the following formula:

$$G_l = \left[ g_{l,m1},...,g_{l,mM} \right] = F_l^* \Phi_l^{-\frac{1}{2}} .$$

In a variant of realisation, if some coefficients of the matrix $\Phi$, are lower than a predetermined threshold, the processor 700 doesn't transfer the corresponding uplink weighting vector to the channel interface. In such case, a reduced number of pilot signals needs then to be transferred to the second telecommunication device 60.

If the interference correlation matrices $R_{IN,l}$ is forced to the identity matrix,

$G_l = \left[ g_{l,m1},...,g_{l,mM} \right] = F_l^* \Phi_l^{-\frac{1}{2}}$ is equal to the identity matrix.

At next step S1104 the processor 700 transfers the power information $\eta_l$ or $\eta$ and the uplink weighting vectors $g_{l,m} = [g_{l,ml},...,g_{l,mM}]^T$ with $m$=1 to $M$ and $l$=1 to $L$ to the channel interface 705.

At next step S1105, the processor 700 checks whether or not it is time to transfer pilot signals to the second telecommunication device 60. As example, the pilot signals are transferred with a periodicity of few milliseconds. The periodicity is determined either by the first or the second telecommunication device. When it is determined by the second telecommunication device 10, the second telecommunication device transfer to the first telecommunication device 20, the periodicity the first telecommunication device 20 has to use.

In another variant, the pilot signals are transferred when at least one weighting vector $g_{l,m}$ varies a lot from the previously calculated $g_{l,m}$, as example if there is more than twenty percents of variation.

If it isn't time to transfer pilot signals to the second telecommunication device 160, the processor 700 moves to step S1100 and executes the loop constituted by the steps S1100 to S1105.

If it is time to transfer pilot signals to the second telecommunication device 60, the processor 700 moves to step S1106.

At next step S 1106, the processor 700 transfers at most $M$ pilot signals to the channel interface 705. The pilot signal $r_{l,m}(p)$ , with $m$=1 to $M$, transferred has $p_0$ symbols which are mutually orthogonal as:

$$\frac{1}{p_0} \sum_{p=1}^{p_0} r_{l,m1}(p)^* r_{l,m2}(p) = 1 \text{ if } m_1 = m_2 \text{ and 0 otherwise.}$$

Each of the at most $M$ pilot signals are duplicating at most $M$ times. Each duplicated pilot signal is weighted by the elements of an uplink weighting vector $g_{l,m} = [g_{l,ml},...,g_{l,mM}]^T$ and transferred to the second telecommunication device 60.

At next step S 1107, the processor 700 checks whether or not it is time to transfer the power information $\eta$ or the power information $\eta_l$ for each of the $L$ frequency subbands to the second telecommunication device 68. As example, the power information $\eta$ or $\eta_l$ are transferred with a periodicity of few hundred milliseconds. The periodicity is determined either by the first or the second telecommunication device. When it is determined by the second telecommunication device 10, the second telecommunication device transfer to the first telecommunication device 20, the periodicity the first telecommunication device 20 has to use.

In another variant, the pilot signals or are transferred when at least one weighting vector $g_{l,m}$ varies a lot from the previously calculated $g_{l,m}$ , as example if there is more than twenty percents of variation.

If it isn't time to transfer the power information $\eta$ or $\eta_l$ to the second telecommunication device 60, the processor 700 moves to step S1100 and executes the loop constituted by the steps S1100 to S1107.

If it is time to transfer the power information $\eta$ or $\eta_l$ to the second telecommunication device 60, the processor 700 moves to step S1108.

At next step S1108, the processor 700 obtains the power information $\eta$ or $\eta_l$ which is representative of the transmit power.

The processor 700 determines the same power information $\eta$ for all of the frequency subbands or determines a power information $\eta_l$ for each subband.

When the same power information $\eta$ is determined for all of the frequency subbands, $\eta$ is preferably equal to:

$$\eta = \frac{P_0}{(t_0 - t_1 + 1)LM \sum_{t=t_1}^{t_0} \sum_{l=1}^{L} \sum_{m=1}^{M} \left\| H_l^T(t) g_{l,m}(t) \right\|^2}$$

derived from $P_0 = \dfrac{1}{(t_0 - t_1 + 1)LM} \sum\limits_{t=t_1}^{t_0} \sum\limits_{l=1}^{L} \sum\limits_{m=1}^{M} \eta \left\| H_l^T(t) g_{l,m}(t) \right\|^2$ .

$P_0$ is the average power of the pilot signals transferred by the second telecommunication device 68 to the first telecommunication 60, $t_0$ is the time index where it is decided to send pilot symbols, $t_1$ is the time index when previous pilot symbols have been sent or is equal to $t_1 = t_0 - \Delta_t$ where $\Delta_t$, is a predetermined value, $H_l(t)$ is the channel response matrix of the $l$-th frequency subband determined at the instant $t$ by the first telecommunication device $68_k$ from pilot signals received from the second telecommunication device 60 and $H_l^T$ denote the transpose of $H_l(t)$.

When a power information $\eta_l$ is determined for each frequency subband,

$$\eta_l = \frac{P_0}{(t_0 - t_1 + 1)M \sum_{t=t_1}^{t_0} \sum_{m=1}^{M} \left\| H_l^T(t) g_{l,m}(t) \right\|^2}$$

derived from $P_0 = \dfrac{1}{(t_0 - t_1 + 1)M} \sum\limits_{t_1}^{t_0} \sum\limits_{m=1}^{M} \eta_l \left\| H_l^T(t) g_{l,m}(t) \right\|^2$ .

At next step S 1109, the processor 700 transfers the power information or $\eta_l$ to the channel interface 705 which transfers at least a signal representative of the power information $\eta$ or $\eta_l$ to the second telecommunication 60.

At next step S1110, the processor 700 memorises the power information $\eta$ or $\eta_l$ in that RAM memory 703.

The processor 700 returns to step S 1100.

**Fig. 11b** is a second algorithm executed by the first telecommunication device which is used in the second telecommunication system according to a fourth mode of realisation of the present invention.

At step S1150, the processor 700 receives from the interference measurement module 800 of the channel interface 705, the interference correlation matrices $R_{IN,l}$, with $l$=1 to $L$, of the first telecommunication device $68_k$ which are respectively representative of the interferences generated by any other electric devices in each of the $l = 1$ to $L$ frequency subbands of the MIMO-OFDM system.

In a variant, the processor 700 forces the interference correlation matrices $R_{IN,l}$ to the identity matrix.

At next step S1151, the processor 700 executes an eigenvalue decomposition of each of the interference correlation matrices $R_{IN,l}$ . $R_{IN,l} = F_l \Phi_l F_l^H$ , where $\Phi$, and $F_l$ are $M*M$ diagonal and unitary matrices.

If the interference correlation matrices $R_{IN,l}$ is forced to the identity matrix, $\Phi_l$ and $F_l$ are also equal to the identity matrix.

At next step S 1152, the processor 700 reads in the RAM memory 703 a power information $\eta_l$ for the $l$-th frequency subband with $l$=1 to $L$ or a power information $\eta$ used for all of the frequency subbands.

At next step S 1153, the processor 700 calculates the uplink' weighting vectors $g_{l,m} = [g_{l,ml}, ..., g_{l,mM}]^T$, with m=1 to $M$ and $l$=l to $L$ using the following formula:

$$G_l = \left[ g_{l,m1}, ..., g_{l,mM} \right] = F_l^{\star} \Phi_l^{-\frac{1}{2}}.$$

In a variant of realisation, if some coefficients of the matrix $\Phi_l$ are lower than a predetermined threshold, the processor 700 doesn't transfer the corresponding uplink weighting vector to the channel interface. In such case, a reduced number of pilot signals needs then to be transferred to the second telecommunication device 60.

If the interference correlation matrices $R_{IN,l}$ is forced to the identity matrix,

$$G_l = \left[ g_{l,m1}, ..., g_{l,mM} \right] = F_l^{\star} \Phi_l^{-\frac{1}{2}}$$ is equal to the identity matrix.

At next step S 1154 the processor 700 transfers the power information $\eta_l$ or $\eta$ and the uplink weighting vectors

$$g_{l,m} = \left[ g_{l,m1}, ..., g_{l,mM} \right]^T$$ , with $m$=1 to $M$ and $l$=1 to $L$ to the channel interface 705.

At next step S1155, the processor 700 checks whether or not it is time to transfer pilot signals to the second telecommunication device 60. As example, the pilot signals are transferred with a periodicity of few milliseconds.

The periodicity is determined either by the first or the second telecommunication device.

In another variant, the pilot signals are transferred when at least one weighting vector $g_{l,m}$ varies a lot from the previously calculated $g_{l,m}$, as example if there is more than twenty percents of variation.

If it isn't time to transfer pilot signals to the second telecommunication device 160, the processor 700 moves to step S1150 and executes the loop constituted by the steps S1150 to S1155.

If it is time to transfer pilot signals to the second telecommunication device 60, the processor 700 moves to step S 1156.

At next step S1156, the processor 700 transfers at most $M$ pilot signals to the channel interface 705. The pilot signal $r_{l,m}(p)$ , with $m$=1 to $M$, transferred has $p_0$ symbols which are mutually orthogonal as:

$$z \frac{1}{p_0} \sum_{p=1}^{p_0} r_{l,m1}(p)^{\star} r_{l,m2}(p) = 1$$ if $m_1 = m_2$ and 0 otherwise.

Each of the at most $M$ pilot signals are duplicating at most $M$ times. Each duplicated pilot signal is weighted by the elements of an uplink weighting vector $g_{l,m} = \left[ g_{l,m1}, ..., g_{l,mM} \right]^T$ and transferred to the second telecommunication device 60.

At next step S1157, the processor 700 checks whether br not a message representative of a request of an update of the power information $\eta_l$ or $\eta$ has been received by the channel interface 705. The message representative of a request of an request of the power information $\eta_l$ or $\eta$ are or is transferred by the second telecommunication device 60 as it will be disclosed hereinafter.

If such message is not received, the processor 700 moves to step S1150 and executes the loop constituted by the steps S1150 to S1157.

If such message is received, the processor 700 moves to step S1158.

At step S1158, the processor 700 checks whether or not the message representative of a request of an update of the power information $\eta_l$ or $\eta$ comprises an information representative of an increase or a decrease command of $\eta_l$ or $\eta$.

If the message representative of a request of an update of the power information $\eta_l$ or $\eta$ comprises an information representative of an increase or a decrease command of $\eta_l$ or $\eta$, the processor 700 moves to step S1159, otherwise the processor 700 moves to step S1161.

At step S1159, the processor 700 adjusts the power information $\eta_l$, or $\eta$. If the information is representative of an increase, the processor 700 increases the power information $\eta_l$ or $\eta$ stored in the RAM memory 703 by one decibel, if the information is representative of a decrease, the processor 700 decreases the power information $\eta_l$ or $\eta$ stored in the RAM memory 703 by one decibel.

At next step S 1160, the processor 700 memorises the modified power information $\eta_l$ or $\eta$ in that RAM memory 703.

Then processor 700 moves then to step S 1163.

At step S1163, the processor 700 checks whether or not it is time to transfer the power information $\eta_l$ or $\eta$ to the second telecommunication device 60. As example, the power information $\eta_l$ or $\eta$ is transferred with a periodicity of few seconds.

If it isn't time to transfer the power information $\eta_l$ or $\eta$ to the second telecommunication device 60, the processor 700 moves to step S 1150 and executes the present algorithm as it has been already disclosed.

If it is time to transfer the power information $\eta_l$ or $\eta$ to the second telecommunication device 60, the processor 700 moves to step S1164.

At step S 1164, the processor 700 transfers the power information $\eta_l$ or $\eta$ to the channel interface 705 which transfers at least a signal representative of the power information $\eta_l$ or $\eta$ to the second telecommunication 60.

Such transfer enable the first and the second telecommunication devices to synchronise over a long period of time the power information $\eta_l$ or $\eta$.

After that, the processor 700 moves to step S 1150 and executes the present algorithm as it has been already disclosed.

At step S1161, the processor 700 checks whether or not the message representative of a request of an update of the power information $\eta_l$ or $\eta$ comprises a value of the power information $\eta_l$ or $\eta$.

If the message representative of a request of an update of the power information $\eta_l$ or $\eta$ comprises a value of the power information $\eta_l$ or $\eta$, the processor 700 moves to step S1162, otherwise the processor 700 moves to step S1165.

At step S 1162, the processor 700 memorises the power information $\eta_l$ or $\eta$ in that RAM memory 703. After that, the processor 700 moves to step S 1163 already described.

At step S1165 the processor 700 calculates the power information $\eta_l$ or $\eta$ which is representative of the transmit power as it has been disclosed at step S1108 of the Fig. 11a.

At next step S1166, the processor 700 transfers the power information $\eta_l$ or $\eta$ to the channel interface 705 which transfers at least a signal representative of the power information $\eta_l$ or $\eta$ to the second telecommunication 60.

At next step S1167, the processor 700 memorises the power information $\eta_l$ or $\eta$ in that RAM memory 703.

After that, the processor 700 returns to step S 1150.

**Fig. 12a** is a first algorithm executed by the second telecommunication device which is used in the second telecommunication system according to the third mode of realisation of the present invention.

At step S1200, the signals transferred at step S1106 by at least a first telecommunication device $68_k$, are received through the channel interface 905 of the second telecommunication device 60.

In the *l*-th frequency subband, the *p*-th sample $x_{BS,l}(p)$ of the received signal by the second telecommunication device 60 is expressed as: $x_{BS,l}(p) = \sqrt{\eta_l}\, H_l^T G_l r_l(p) + z_{BS,l}(p)$, wherein where $^T$ denotes the transpose, $r_l(p) = [r_{l,1}(p),...,r_{l,M}(p)]^T$ denotes the pilot signal received by the second telecommunication device 20 from all the *M* antennas of the first telecommunication devices $68_k$ which sent the signals, $z_{BS,l}(p) = [z_{BS,l,1}(p),...,z_{BS,l,N}(p)]^T$ represents the $N*1$ second telecommunication device 60 interference components and in the case of a reciprocal channel, the uplink channel is expressed as $H_l^T$ using the downlink channel matrix $H_l$ for the *l*-th subband.

If $G_l$ is equal to the identity matrix, the p-th sample $x_{BS,l}(p)$ of the received signal in the *l*-th frequency subband by the second telecommunication device 60 is expressed as $x_{BS,l}(p) = \sqrt{\eta_l}\, H_l^T r_l(p) + z_{BS,l}(p)$.

At next step S1201, the processor 900 checks if a message comprising a power information $\eta_l$ or $\eta$ has been received through the channel interface 905. Such message is as the one transferred at step S 1109 of the Fig. 12a.

If a message comprising a power information $\eta_l$ or $\eta$ has been received through the channel interface 905, the processor 900 moves to step S1202, memorises the received a power information $\eta_l$ or $\eta$ in the RAM memory 903 and moves after to step S1203.

If no message comprising a power information $\eta_l$ or $\eta$ has been received through the channel interface 905, the processor 900 moves to step S1203.

At step S1203, the processor 900 reads the last memorised power information $\eta_l$ or $\eta$.

At step S1204, the processor 900 estimates, for each of the *L* frequency subbands, the product of matrices $H_l^H G_l$.

The received signals $p = 1,...,p_0$ are totally expressed in matrix form as:

$$X_{BS,l} = \left[x_{BS,l}(1),...,x_{BS,l}(p_0)\right] = \sqrt{\eta_l}\, H_l^H G_l R_l + Z_{BS,l}$$

$$R_l = \left[r_l(1),...,r_l(p_0)\right]$$

$$Z_{BS,l} = \left[z_{BS,l}(1),...,z_{BS,l}(p_0)\right]$$

$$\text{where } \frac{R_l R_l^{H}}{p_0} = I \text{ as } \frac{1}{p_0}\sum_{p=1}^{p_0} r_{l,m1}(p)^{\cdot} r_{l,m2}(p) = 1 \text{ if } m_1 = m_2 \text{ and } 0 \text{ otherwise.}$$

Then, the processor 900 estimates $H_l^{T} G_l$ as

$$J_l = \frac{1}{\sqrt{\eta_l \, p_0}} X_{BS,l} R_l^{H} = H_l^{T} G_l + \frac{1}{\sqrt{\eta_l \, p_0}} Z_{BS,l} R_l^{H} .$$

If $G_l$ is equal to the identity matrix, $J_l = H_l^{T} + \frac{1}{\sqrt{\eta_l \, p_0}} Z_{BS,l} R_l^{H} .$

At next step S1205, the processor 900 executes, for each of the $L$ frequency subbands, an eigenvalue decomposition of $J_l^{\cdot} J_l^{T}$ .

At next step S1206, the processor 900 determines, for each of the $L$ frequency subbands, the largest eigenvalue noted $\rho\langle J_l^{\cdot} J_l^{T} \rangle$ of each of the matrices $J_l^{\cdot} J_l^{T}$ .

If $G_l$ is equal to the identity matrix and in ideal conditions, $\rho\langle J_l^{\cdot} J_l^{T} \rangle$ corresponds to $\rho\langle H_l^{H} H_l \rangle$ .

It has to be noted here that, if at least two groups of data have to be transferred in parallel to the first telecommunication device $68_k$, the processor 900 determines the at least two largest eigenvalues of the matrix $J_l^{\cdot} J_l^{T}$ .

At next step S1207, the processor 900 determines the downlink weighting vectors $w_{n,l}$ with $l$=1 to $L$ to be used in the respective l=1 to $L$ frequency subbands for transferring signals representing a group of data to the first telecommunication device $68_k$ which has transferred the signals received at step S1200.

The downlink weighting vector $w_{n,l}$ for the $l$-th frequency subband is the eigenvector noted $e\langle J_l^{\cdot} J_l^{T} \rangle$ which corresponds to largest the eigenvalue.

If at least two groups of data have to be transferred in parallel to the first telecommunication device $68_k$, the processor 900 determines at least two downlink weighting vectors for each subband. The processor 900 determines the downlink weighting vector $w_{n,l}$ for the $l$-th frequency subband, with n being equal or upper than 2, are the eigenvector noted which corresponds to largest the at least two eigenvalues.

At next step S 1208, the processor 900 estimates, for each of the $L$ frequency subbands, the SINR of the first telecommunication device $68_k$ which has transferred the signals received at step S1200.

Using the transmit power $P_S^{(n,l)}$ for the $n$-th group of data, the SINR $\gamma_{n,l}^{(pre)}$ is predicted using the following formula: $\gamma_{n,l}^{(pre)} = P_S^{(n,l)} . \rho_n\langle J_l^{\cdot} J_l^{T} \rangle$ where $\rho_n\langle \rangle$ is the $n$-th largest eigenvalue of $\langle \rangle$.

If $G_l$ is equal to the identity matrix and in ideal conditions, $\gamma_{n,l}^{(pre)} = P_S^{(n,l)} . \rho_n\langle H_l^{H} H_l \rangle$ which indicates the power of the received signals by the first telecommunication device $68_k$ instead of the SINR.

It has to be noted here that the second telecommunication device 60 can direct the signals transferred to the first telecommunication device $68_k$ which has transferred the signals received at step S 1200 considering the effect of interferences on the first telecommunication device $68_k$ or the effect of the power of the received signals by the first telecommunication device $68_k$ without having the complete knowledge of $H_l$ and also of $R_{IN,l}$.

At next step S1209, the processor 900 determines the modatation and coding scheme to be used for the transfer of signals representative of a group of data to the first telecommunication device $68_k$ using the determined SINR or using the determined power of the received signals by the first telecommunication device $68_k$ or the processor 900 determines, using the predicted SINR or using the determined power of the received signals by the first telecommunication device $68_k$ of all the first telecommunication devices $68_l$ to $68_K$, the first telecommunication device $68_k$ to which signals representative of a group of data have to be sent.

In a variant of realisation, the processor 900 adjusts the transmission power $P_S^{(n,l)}$ by setting the predicted SINR to a predetermined SINR.

**Fig. 12b** is a second algorithm executed by the second telecommunication device which is used in the second telecommunication system according to the fourth mode of realisation of the present invention.

At step S 1250, the signals transferred at step S 1156 of the Fig. 11b by the first telecommunication devices 68, are received through the channel interface 905 of the second telecommunication device 60.

The signals are as the one disclosed at step S1200 of the Fig. 12a.

At next step S 1251, the processor 900 checks if the power of the received signal in each frequency subband is acceptable. The power of the received signal in each frequency subband is acceptable if it is not too low in comparison with the interference component of the second telecommunication device 60 in that $l$-th frequency subband or the power of the received signal in each frequency subband is acceptable if the power is not upper than a predetermined value.

If the power of the received signal in each frequency subband is acceptable, the processor 900 moves to step S1256. If the power of the received signal in at least one each frequency subband is not acceptable, the processor 900 moves to step S 1252.

At step S 1252, the processor 900 commands the transfer of a message representative of a request of an update of the power information to the first telecommunication 60 which sent the pilot signals. The message representative of a request of an update of the power information comprises an information representative of an increase or a decrease command of $\eta$ or the message representative of a request of an update of the power information $\eta_l$ or $\eta$.

At next step S1253, the processor 900 checks is a message comprising a power information $\eta_l$ or $\eta$ value is received through the channel interface 305. Such message is as the one transferred at step S1164 or S 1166 of the Fig. 11b.

If a message comprising a power information $\eta$ has been received through the channel interface 905, the processor 900 moves to step S1255, memorises the received power information $\eta_l$ or $\eta$ in the RAM memory 903 and moves after to step S1250.

If no message comprising a power information $\eta_l$ or $\eta$ has been received through the channel interface 905, the processor 900 moves to step S1254, memorises the power information $\eta_l$ or $\eta$ which corresponds to the one transferred at step S1252 and moves after to step S 1250.

The step S1256 to S1262 are identical to the respective steps S1203 to S1203, they will not be described anymore.

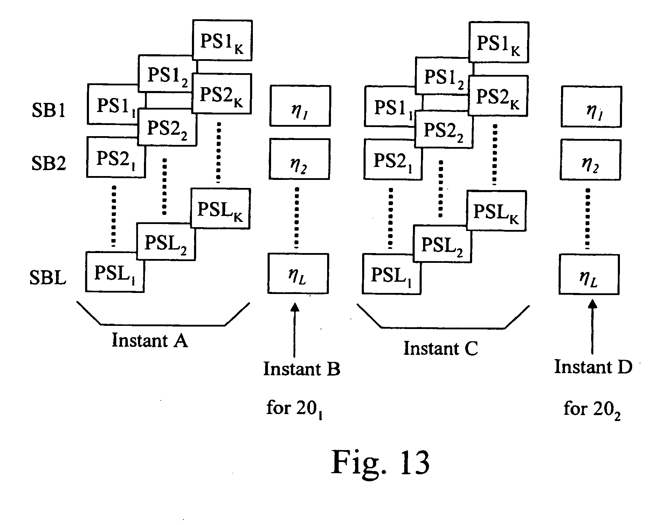

**Fig. 13** is a diagram representing an example of signals transferred by the first telecommunication devices to the second first telecommunication device.

In the Fig. 13, plural frequency subbands SB1 to SBL are shown.

The signals shown in the example of the Fig. 13 are transferred at four different instants.

At the instant A, each first telecommunication device $20_k$ with $k$=1 to $K$ transfers simultaneously weighted pilot signals.

The first telecommunication device $20_l$ transfers at least one pilot signal noted $PSl_l$, with $l$=1 to $L$, in each of the frequency subband SBl with $l$=1 to $L$.

At the same time, the first telecommunication device $20_2$ transfers at least one pilot signal noted $PSl_2$, with $l$=1 to $L$, in each of the frequency subband SBl with $l$=1 to $L$.

At the same time, the first telecommunication device $20_K$ transfers at least one pilot signal noted $PSl_K$, with $l$=1 to $L$, in each of the frequency subband SBl with $l$=1 to $L$.

The pilot signals transferred in the same frequency subband are representative of orthogonal pilot symbols, obtained as example and in non limitative way from Walsh Hadamard sequences.

At the instant B, the first telecommunication device $20_l$ transfers power information $\eta_l$ with $l$=1 to $L$ in the respective frequency subbands SBl to SBL.

At the instant C, each first telecommunication device $20_k$ with $k$=1 to $K$ transfers simultaneously weighted pilot signals.

The first telecommunication device $20_l$ transfers at least one pilot signal noted $PSl_l$, with $l$=1 to $L$, in each of the frequency subband SB1 with $l$=1 to $L$.

At the same time, the first telecommunication device $20_2$ transfers at least one pilot signal noted $PSl_2$, with $l$=1 to $L$, in each of the frequency subband SBl with $l$=1 to $L$.

At the same time, the first telecommunication device $20_K$ transfers at least one pilot signal noted $PSl_K$, with $l$=1 to L, in each of the frequency subband SBl with $l$=1 to $L$.

The pilot signals transferred in the same frequency subband are representative of orthogonal pilot symbols.

At the instant D, the first telecommunication device $20_2$ transfers power information $\eta_l$ with $l$=1 to $L$ in the respective frequency subbands SBl to SBL.

The plural weighted pilot signals are then transferred at a first rate and the power information are transferred at a second rate which is strictly lower than the first rate.

It has to be noted here that, when a single power information $\eta$ is transferred by each first telecommunication device, plural first telecommunication devices 20 can also transfer the power information $\eta$ simultaneously in different frequency subbands.

Naturally, many modifications can be made to the embodiments of the invention described above without departing from the scope of the present invention.

**Claims**

1.  Method for transferring information related to interference components received by a first telecommunication device ($20_I$, $20_K$) and power information used by the first telecommunication device for weighting at least one pilot signal transferred by the first telecommunication device to a second telecommunication device (10), the first and the second telecommunication devices being linked through a wireless telecommunication network (15), **characterised by** the at least one pilot signal being further weighted by the information related to interference components received by the first telecommunication device, and in that the method comprises the steps executed by the first telecommunication device of :

    - transferring (S404) plural weighted pilot signals at a first rate,
    - transferring (S407) plural power information at a second rate which is strictly lower than the first rate.

2.  Method according to claim 1, **characterised in that** the plural weighted pilot signals are composed of :

    - at least one first pilot signal weighted by the information related to interference components received by the first telecommunication device and the power information, the power information, being memorized by the first telecommunication device,
    - at least one second pilot signal weighted by the information related to interference components received by the first telecommunication device after the transfer of the at least one first pilot signal and the same power information which weights the at least one first pilot signal.

3.  Method according to claim 2, **characterised in that** the first rate is a predetermined rate or depends on the variation between the information related to interference components received by the first telecommunication device after the transfer of the at least one first pilot signal and the information related to interference components received by the first telecommunication which weights the at least one first pilot symbols or depends on the channel response variation between the second telecommunication device and the first telecommunication device.

4.  Method according to claim 2, **characterised in that** the second rate is a predetermined rate or depends on the variation between the information related to interference components received by the first telecommunication device after the transfer of the at least one first pilot signal and the information related to interference components received by the first telecommunication which weights the at least one first pilot symbols or depends on long term channel response variation between the second telecommunication device and the first telecommunication device.

5.  Method according to claim 3 or 4, **characterised in that** the predetermined rate is received from the second telecommunication device.

6.  Method according to claim 2, **characterised in that** prior to transfer of a power information, the method comprises the steps of:

    - checking (S405) if the memorized power information needs to be updated,
    - obtaining (S406) another power information and memorizing the other power information if the memorized power information needs to be updated.

7.  Method according to claim 6, **characterised in that** the checking if the memorized power information needs to be updated is executed by checking if a message representative of a request of an update of the power information has been transferred by the second telecommunication device to the first telecommunication device.

8.  Method according to claim 7, **characterized in that** the other power information is obtained by incrementing or decrementing the memorized power information according to the content of message representative of a request of an update of the power information.

9.  Method according to claim 7, **characterized in that** the other power information is obtained by reading the power information comprised in the message representative of a request of an update of the power information.

**10.** Method according to claim 6, **characterised in that** the other power information is calculated by the first telecommunication device.

**11.** Method according to any of the claims 1 to 10, **characterised in that** the wireless telecommunication network comprises multiple frequency subbands and at least a pilot signal is transferred in each frequency subband.

**12.** Method for controlling the transfer of signals to a first telecommunication device ($20_l$, $20_K$) by a second telecommunication device (10) through a wireless telecommunication network (15), the first and the second telecommunication devices being linked through the wireless telecommunication network, the second telecommunication device receiving from the first telecommunication device power information used by the first telecommunication device for weighting at least one pilot signal transferred by the first telecommunication device to the second telecommunication device, **characterised by** the at least one pilot signal being further weighted by information related to interference components received by the first telecommunication device, and in that the method comprises the steps executed by the second telecommunication device of :

- receiving (S500) plural weighted pilot signals at a first rate,
- receiving (S501) plural power information at a second rate which is strictly lower than the first rate,
- determining (S504), from at least one received pilot signal and from at least one power information received prior to the at least one received pilot signal, information representative of interference components received by the first telecommunication device,
- controlling (S505) the transfer of signals representative of a group of data to the first telecommunication device according to the determined information representative of interference components received by the first telecommunication device.

**13.** Method according to claim 12, **characterised in that** the method comprises the steps of checking if the power of the at least one received pilot signal is acceptable or not and if the power is not acceptable, transferring to the first telecommunication device a message representative of a request of an update of the power information.

**14.** Method according to claim 13, **characterized in that** the message representative of a request of an update of the power information comprises an information indicating if the power information needs to be incremented or decremented by the first telecommunication device.

**15.** Method according to claim 13, **characterized in that** the message representative of a request of an update of the power information comprises a power information that the first telecommunication device has to use.

**16.** Method according to any of the claims 12 to 15, **characterised in that** the method comprises the step of transferring a message comprising the value of first and/or the second rate.

**17.** Method according to any of the claims 12 to 15, **characterised in that** the method comprises the step of determining, from the weighted pilot signals, an information enabling the process of a group of data received from the first telecommunication device.

**18.** Method according to claim 12, **characterised in that** plural first telecommunication devices are linked to the second telecommunication device and **in that** at least one weighted pilot signal is received simultaneously from each first telecommunication device, the simultaneously received pilot signals being orthogonal pilot signals.

**19.** Method according to claim 18, **characterised in that** at least one power information is received from each first telecommunication device at different time and/or in different frequency subbands.

**20.** Device for transferring information related to interference components received by a first telecommunication device and power information used by the first telecommunication device for weighting at least one pilot signal transferred by the first telecommunication device to a second telecommunication device, the first and the second telecommunication devices being linked through a wireless telecommunication network **characterised by** the at least one pilot signal being further weighted by the information related to interference components received by the first telecommunication device, and in that the device is included in the first telecommunication device and comprises :

- means for transferring plural weighted pilot signals at a first rate,
- means for transferring plural power information at a second rate which is strictly lower than the first rate.

**21.** Device for controlling the transfer of signals to a first telecommunication device by a second telecommunication device through a wireless telecommunication network, the first and the second telecommunication devices being linked through a wireless telecommunication network, the second telecommunication device receiving from the first telecommunication device power information used by the first telecommunication device for weighting at least one pilot signal transferred by the first telecommunication device to the second telecommunication device the at least one pilot signal being further weighted by information related to interference components received by the first telecommunication device, **characterised in that** the device for controlling the transfer of signal is included in the second telecommunication device and comprises :

- means for receiving plural weighted pilot signals at a first rate,
- means for receiving plural power information at a second rate which is strictly lower than the first rate.
- means for determining, from at least one received pilot signal and from at least one power information received prior to the at least one received pilot signal, information representative of interference components received by the first telecommunication device,
- means for controlling the transfer of signals representative of a group of data to the first telecommunication device according to the determined information representative of interference components received by the first telecommunication device.

**22.** Computer program which can be directly loadable into a programmable device, comprising instructions or portions of code for implementing the steps of the method according to claims 1 to 11, when said computer program is executed on a programmable device.

**23.** Computer program which can be directly loadable into a programmable device, comprising instructions or portions of code for implementing the steps of the method according to claims 12 to 19, when said computer program is executed on a programmable device.

**Patentansprüche**

**1.** Verfahren zum Übertragen von Information in Bezug auf durch eine erste Telekommunikationsvorrichtung ($20_1$, $20_K$) empfangene Interferenzkomponenten und durch die erste Telekommunikationsvorrichtung zum Gewichten wenigstens eines durch die erste Telekommunikationsvorrichtung zu einer zweiten Telekommunikationsvorrichtung (10) übertragenen Pilotsignals verwendete Leistungsinformation, wobei die erste und die zweite Telekommunikationsvorrichtung über ein drahtloses Telekommunikationsnetz (15) verbunden sind, **dadurch gekennzeichnet, dass** das wenigstens eine Pilotsignal weiterhin durch die Information in Bezug auf die durch die erste Telekommunikationsvorrichtung empfangenen Interferenzkomponenten gewichtet wird und dass das Verfahren die durch die erste Telekommunikationsvorrichtung ausgeführten folgenden Schritte aufweist:

- Übertragen (S404) mehrerer gewichteter Pilotsignale mit einer ersten Rate,
- Übertragen (S407) von mehreren Leistungsinformationen mit einer zweiten Rate, die streng niedriger als die erste Rate ist.

**2.** Verfahren nach Anspruch 1, **dadurch gekennzeichnet, dass** die mehreren gewichteten Pilotsignale zusammengesetzt sind aus:

- wenigstens einem durch die Information in Bezug auf durch die erste Telekommunikationsvorrichtung empfangenen Interferenzkomponenten und die Leistungsinformation gewichteten ersten Pilotsignal, wobei die Leistungsinformation durch die erste Telekommunikationsvorrichtung gespeichert wird,
- wenigstens einem durch die Information in Bezug auf durch die erste Telekommunikationsvorrichtung empfangenen Interferenzkomponenten nach der Übertragung des wenigstens einen ersten Pilotsignals und dieselbe Leistungsinformation, die das wenigstens eine erste Pilotsignal gewichtet, gewichteten zweiten Pilotsignal.

**3.** Verfahren nach Anspruch 2, **dadurch gekennzeichnet, dass** die erste Rate eine vorbestimmte Rate ist oder von der Variation zwischen der Information in Bezug auf durch die erste Telekommunikationsvorrichtung empfangene Interferenzkomponenten nach der Übertragung des wenigstens einen ersten Pilotsignals und der Information in Bezug auf durch die erste Telekommunikationsvorrichtung empfangene Interferenzkomponenten, die das wenigstens eine erste Pilotsymbol gewichtet, abhängt oder von der Kanalantwortvariation zwischen der zweiten Tetekommunikationsvorrichtung und der ersten Telekommunikationsvorrichtung abhängt.

**4.** Verfahren nach Anspruch 2, **dadurch gekennzeichnet, dass** die zweite Rate eine vorbestimmte Rate ist oder von der Variation zwischen der Information in Bezug auf durch die erste Telekommunikationsvorrichtung empfangene Interferenzkomponenten nach der Übertragung des wenigstens einen ersten Pilotsignals und der Information in Bezug auf durch die erste Telekommunikationsvorrichtung empfangene Interferenzkomponenten, die das wenigstens eine erste Pilotsymbol gewichtet, abhängt oder von einer langzeitigen Kanalantwortvariation zwischen der zweiten Telekommunikationsvorrichtung und der ersten Telekommunikationsvorrichtung abhängt.

**5.** Verfahren nach Anspruch 3 oder 4, **dadurch gekennzeichnet, dass** die vorbestimmte Rate von der zweiten Telekommunikationsvorrichtung empfangen wird.

**6.** Verfahren nach Anspruch 2, **dadurch gekennzeichnet, dass** das Verfahren vor einer Übertragung einer Leistungsinformation folgendes aufweist:

- Prüfen (S405), ob die gespeicherte Leistungsinformation aktualisiert werden muss,
- Erhalten (S406) einer weiteren Leistungsinformation und Speichern der weiteren Leistungsinformation, wenn die gespeicherte Leistungsinformation aktualisiert werden muss.

**7.** Verfahren nach Anspruch 6, **dadurch gekennzeichnet, dass** das Prüfen, ob die gespeicherte Leistungsinformation aktualisiert werden muss, durch Prüfen ausgeführt wird, ob eine Nachricht, die eine Anforderung einer Aktualisierung der Leistungsinformation darstellt, durch die zweite Telekommunikationsvorrichtung zu der ersten Telekommunikationsvorrichtung übertragen worden ist.

**8.** Verfahren nach Anspruch 7, **dadurch gekennzeichnet, dass** die weitere Leistungsinformation durch Inkrementieren oder Dekrementieren der gespeicherten Leistungsinformation gemäß dem Inhalt der Nachricht, die eine Anforderung einer Aktualisierung der Leistungsinformation darstellt, erhalten wird.

**9.** Verfahren nach Anspruch 7, **dadurch gekennzeichnet, dass** die weitere Leistungsinformation durch Lesen der Leistungsinformation erhalten wird, die in der Nachricht umfasst ist, die eine Anforderung einer Aktualisierung der Leistungsinformation darstellt.

**10.** Verfahren nach Anspruch 6, **dadurch gekennzeichnet, dass** die weitere Leistungsinformation durch die erste Telekommunikationsvorrichtung berechnet wird.

**11.** Verfahren nach einem der Ansprüche 1 bis 10, **dadurch gekennzeichnet, dass** das drahtlose Telekommunikationsnetz mehrere Frequenz-Unterbänder aufweist und wenigstens ein Pilotsignal in jedem Frequenz-Unterband übertragen wird.

**12.** Verfahren zum Steuern der Übertragung von Signalen zu einer ersten Telekommunikationsvorrichtung ($20_1$, $20_K$) durch eine zweite Telekommunikationsvorrichtung (10) über ein drahtloses Telekommunikationsnetz (15), wobei die erste und die zweite Telekommunikationsvorrichtung über das drahtlose Telekommunikationsnetz verbunden sind, wobei die zweite Telekommunikationsvorrichtung von der ersten Telekommunikationsvorrichtung durch die erste Telekommunikationsvorrichtung verwendete Leistungsinformation zum Gewichten wenigstens eines durch die erste Telekommunikationsvorrichtung zu der zweiten Telekommunikationsvorrichtung übertragenen Pilotsignals empfängt, **dadurch gekennzeichnet, dass** das wenigstens eine Pilotsignal weiterhin durch Information in Bezug auf durch die erste Telekommunikationsvorrichtung empfangene Interferenzkomponenten gewichtet wird und das Verfahren die durch die zweite Telekommunikationsvorrichtung ausgeführten folgenden Schritte aufweist:

- Empfangen (S500) mehrerer gewichteter Pilotsignale mit einer ersten Rate,
- Empfangen (S501) mehrerer Leistungsinformationen mit einer zweiten Rate, die streng niedriger als die erste Rate ist,
- Bestimmen (S504) von Information, die durch die erste Telekommunikationsvorrichtung empfangene Interferenzkomponenten darstellt, aus wenigstens einem empfangenen Pilotsignal und aus wenigstens einer vor dem wenigstens einen empfangen Pilotsignal empfangenen Leistungsinformation,
- Steuern (S505) der Übertragung von Signalen, die eine Gruppe von Daten darstellen, zu der ersten Telekommunikationsvorrichtung gemäß der bestimmten Information, die durch die erste Telekommunikationsvorrichtung empfangene Interferenzkomponenten darstellt.

**13.** Verfahren nach Anspruch 12, **dadurch gekennzeichnet, dass** das Verfahren die Schritte zum Prüfen, ob die Leistung des wenigstens einen empfangenen Pilotsignals akzeptabel ist oder nicht, und dann, wenn die Leistung nicht akzeptabel ist, zum Übertragen einer Nachricht, die eine Anforderung einer Aktualisierung der Leistungsinformation darstellt, zu der ersten Telekommunikationsvorrichtung aufweist.

14. Verfahren nach Anspruch 13, **dadurch gekennzeichnet, dass** die Nachricht, die eine Anforderung einer Aktualisierung der Leistungsinformation darstellt, eine Information aufweist, die anzeigt, ob die Leistungsinformation durch die erste Telekommunikationsvorrichtung inkrementiert oder dekrementiert werden muss.

15. Verfahren nach Anspruch 13, **dadurch gekennzeichnet, dass** die Nachricht, die eine Anforderung einer Aktualisierung der Leistungsinformation darstellt, eine Leistungsinformation aufweist, die die erste Telekommunikationsvorrichtung zu verwenden hat.

16. Verfahren nach einem der Ansprüche 12 bis 15, **dadurch gekennzeichnet, dass** das Verfahren den Schritt zum Übertragen einer Nachricht aufweist, die den Wert einer ersten und/oder der zweiten Rate umfasst.

17. Verfahren nach einem der Ansprüche 12 bis 15, **dadurch gekennzeichnet, dass** das Verfahren den Schritt zum Bestimmen einer Information, die die Verarbeitung einer Gruppe von von der ersten Telekommunikationsvorrichtung empfangenen Daten ermöglicht, aus den gewichteten Pilotsignalen aufweist.

18. Verfahren nach Anspruch 12, **dadurch gekennzeichnet, dass** mehrere erste Telekommunikationsvorrichtungen mit der zweiten Telekommunikationsvorrichtung verbunden sind und dass wenigstens ein gewichtetes Pilotsignal gleichzeitig von jeder ersten Telekommunikationsvorrichtung empfangen wird, wobei die gleichzeitig empfangenen Pilotsignale orthogonale Pilotsignale sind.

19. Verfahren nach Anspruch 18, **dadurch gekennzeichnet, dass** wenigstens eine Leistungsinformation von jeder ersten Telekommunikationsvorrichtung zu einer unterschiedlichen Zeit und/oder in unterschiedlichen Frequenz-Unterbändern empfangen wird.

20. Vorrichtung zum Übertragen von Information in Bezug auf durch eine erste Telekommunikationsvorrichtung ($20_1$, $20_K$) empfangene Interferenzkomponenten und durch die erste Telekommunikationsvorrichtung verwendete Leistungsinformation zum Gewichten wenigstens eines durch die erste Telekommunikationsvorrichtung zu einer zweiten Telekommunikationsvorrichtung (10) übertragenen Pilotsignals, wobei die erste und die zweite Telekommunikationsvorrichtung über ein drahtloses Telekommunikationsnetz (15) verbunden sind, **dadurch gekennzeichnet, dass** das wenigstens eine Pilotsignal weiterhin durch die Information in Bezug auf die durch die erste Telekommunikationsvorrichtung empfangenen Interferenzkomponenten gewichtet wird und dass die Vorrichtung in der ersten Telekommunikationsvorrichtung enthalten ist und folgendes aufweist:

   - eine Einrichtung zum Übertragen mehrerer gewichteter Pilotsignale mit einer ersten Rate,
   - eine Einrichtung zum Übertragen von mehreren Leistungsinformationen mit einer zweiten Rate, die streng niedriger als die erste Rate ist.

21. Vorrichtung zum Steuern der Übertragung von Signalen zu einer ersten Telekommunikationsvorrichtung ($20_1$, $20_K$) durch eine zweite Telekommunikationsvorrichtung (10) über ein drahtloses Telekommunikationsnetz (15), wobei die erste und die zweite Telekommunikationsvorrichtung über das drahtlose Telekommunikationsnetz verbunden sind, wobei die zweite Telekommunikationsvorrichtung von der ersten Telekommunikationsvorrichtung durch die erste Telekommunikationsvorrichtung verwendete Leistungsinformation zum Gewichten wenigstens eines durch die erste Telekommunikationsvorrichtung zu der zweiten Telekommunikationsvorrichtung übertragenen Pilotsignals empfängt, wobei das wenigstens eine Pilotsignal weiterhin durch Information in Bezug auf durch die erste Telekommunikationsvorrichtung empfangene Interferenzkomponenten gewichtet wird und die Vorrichtung in der zweiten Telekommunikationsvorrichtung enthalten ist und folgendes aufweist:

   - eine Einrichtung zum Empfangen mehrerer gewichteter Pilotsignale mit einer ersten Rate,
   - eine Einrichtung zum Empfangen mehrerer Leistungsinformationen mit einer zweiten Rate, die streng niedriger als die erste Rate ist,
   - eine Einrichtung zum Bestimmen von Information, die durch die erste Telekommunikationsvorrichtung empfangene Interferenzkomponenten darstellt, aus wenigstens einem empfangenen Pilotsignal und aus wenigstens einer vor dem wenigstens einen empfangen Pilotsignal empfangener Leistungsinformation,
   - eine Einrichtung zum Steuern der Übertragung von Signalen, die eine Gruppe von Daten darstellen, zu der ersten Telekommunikationsvorrichtung gemäß der bestimmten Information, die durch die erste Telekommunikationsvorrichtung empfangene Interferenzkomponenten darstellt.

**22.** Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 11, wenn das Computerprogramm auf einer programmierbaren Vorrichtung ausgeführt wird.

**23.** Computerprogramm, das direkt ladbar in eine programmierbare Vorrichtung sein kann, mit Anweisungen oder Teilbereichen eines Codes zum Implementieren der Schritte des Verfahrens nach den Ansprüchen 12 bis 19, wenn das Computerprogramm auf einer programmierbaren Vorrichtung ausgeführt wird.

**Revendications**

**1.** Procédé pour transférer une information relative à des composantes d'interférence reçues par un premier dispositif de télécommunication ($20_1$, $20_K$) et une information de puissance utilisée par le premier dispositif de télécommunication pour pondérer au moins un signal pilote transféré par le premier dispositif de télécommunication à un second dispositif de télécommunication (10), le premier et le second dispositifs de télécommunication étant liés au travers d'un réseau de télécommunication sans-fil (15), **caractérisé par**, le au moins un signal pilot étant en outre pondéré par l'information relative à des composantes d'interférence reçues par le premier dispositif de télécommunication, et en ce que le procédé comprend les étapes, exécutées par le premier dispositif de télécommunication, de :

- transférer (S404) plusieurs signaux pilotes pondérés selon un premier débit ;
- transférer (S407) plusieurs informations de puissance selon un second débit qui est strictement inférieur au premier débit.

**2.** Procédé selon la revendication 1, **caractérisé en ce que** les plusieurs signaux pilotes pondérés sont composés de :

- au moins un premier signal pilote pondéré par l'information relative à des composantes d'interférence reçues par le premier dispositif de télécommunication et l'information de puissance, l'information de puissance étant mémorisée par le premier dispositif de télécommunication,
- au moins un second signal pilote pondéré par l'information relative à des composantes d'interférence reçues par le premier dispositif de télécommunication après le transfert du au moins un premier signal pilote et de la même information de puissance qui pondère le au moins un premier signal pilote.

**3.** Procédé selon la revendication 2, **caractérisé en ce que** le premier débit est un débit prédéterminé ou dépend de la variation entre l'information relative à des composantes d'interférence reçues par le premier dispositif de télécommunication après le transfert du au moins un premier signal pilote et de l'information relative à des composantes d'interférence reçues par le premier dispositif de télécommunication qui pondère le au moins un signal pilote ou dépend de la variation de réponse canal entre le second dispositif de télécommunication et le premier dispositif de télécommunication.

**4.** Procédé selon la revendication 2, **caractérisé en ce que** le second débit est un débit prédéterminé ou dépend de la variation entre l'information relative à des composantes d'interférence reçues par le premier dispositif de télécommunication après le transfert du au moins un premier signal pilote et de l'information relative à des composantes d'interférence reçues par le premier dispositif de télécommunication qui pondère le au moins un signal pilote ou dépend de la variation de réponse canal à long terme entre le second dispositif de télécommunication et le premier dispositif de télécommunication.

**5.** Procédé selon la revendication 3 ou 4, **caractérisé en ce que** le débit prédéterminé est reçu du second dispositif de télécommunication.

**6.** Procédé selon la revendication 2, **caractérisé en ce qu'**antérieurement au transfert d'une information de puissance, le procédé comprend les étapes de :

- vérifier (S405) si l'information de puissance mémorisée a besoin d'être mise à jour,
- obtenir (S406) une autre information de puissance et mémoriser l'autre information de puissance si l'information de puissance mémorisée a besoin d'être mise à jour.

**7.** Procédé selon la revendication 6, **caractérisé en ce que** la vérification que l'information de puissance mémorisée a besoin d'être mise à jour est exécutée si un message représentatif d'une requête d'une mise à jour de l'information de puissance a été transférée par le second dispositif de télécommunication au premier dispositif de télécommunication.

**8.** Procédé selon la revendication 7, **caractérisé en ce que** l'autre information de puissance est obtenue en incrémentant ou décrémentant l'information de puissance mémorisée d'après le contenu du message représentatif d'une requête d'une mise à jour de l'information de puissance.

**9.** Procédé selon la revendication 7, **caractérisé en ce que** l'autre information de puissance est obtenue en lisant l'information de puissance comprise dans le message représentatif d'une requête d'une mise à jour de l'information de puissance.

**10.** Procédé selon la revendication 6, **caractérisé en ce que** l'autre information de puissance est calculée par le premier dispositif de télécommunication.

**11.** Procédé selon l'une des revendications 1 à 10, **caractérisé en ce que** le réseau de télécommunication sans-fil comprend de multiple sous-bandes de fréquence et au moins un signal pilote est transféré dans chaque sous-bande de fréquence.

**12.** Procédé pour contrôler le transfert de signaux à un premier dispositif de télécommunication ($20_I$, $20_K$) par un second dispositif de télécommunication (10) au travers d'un réseau de télécommunication sans-fil (15), le premier et le second dispositifs de télécommunication étant liés au travers du réseau de télécommunication sans-fil, le second dispositif de télécommunication recevant du premier dispositif de télécommunication une information de puissance utilisée par le premier dispositif de télécommunication pour pondérer au moins un signal pilote transféré par le premier dispositif de télécommunication au second dispositif de télécommunication, **caractérisé par**, le au moins un signal pilot étant en outre pondéré par une information relative à des composantes d'interférence reçues par le premier dispositif de télécommunication, et en ce que le procédé comprend les étapes, exécutées par le second dispositif de télécommunication, de :

   - recevoir (S500) plusieurs signaux pilotes pondérés selon un premier débit ;
   - recevoir (S501) plusieurs informations de puissance selon un second débit qui est strictement inférieur au premier débit,
   - déterminer (S504), à partir d'au moins un signal pilote reçu et à partir d'au moins une information de puissance reçue antérieurement audit au moins un signal pilote, une information relative à des composantes d'interférence reçues par le premier dispositif de télécommunication,
   - contrôler (S505) le transfert de signaux représentatifs d'un groupe de données au premier dispositif de télécommunication d'après l'information relative à des composantes d'interférence reçues par le premier dispositif de télécommunication déterminée.

**13.** Procédé selon la revendication 12, **caractérisé en ce que** le procédé comprend les étapes de vérifier si la puissance du au moins un signal pilot reçu est acceptable ou pas et si la puissance n'est pas acceptable, transférer au premier dispositif de télécommunication d'un message représentatif d'une requête d'une mise à jour de l'information de puissance.

**14.** Procédé selon la revendication 13, **caractérisé en ce que** le message représentatif d'une requête d'une mise à jour de l'information de puissance comprend une information indiquant si l'information de puissance a besoin d'être incrémentée ou décrémentée par le premier dispositif de télécommunication.

**15.** Procédé selon la revendication 13, **caractérisé en ce que** le message représentatif d'une requête d'une mise à jour de l'information de puissance comprend une information de puissance que le premier dispositif de télécommunication doit utiliser.

**16.** Procédé selon l'une des revendications 12 à 15, **caractérisé en ce que** le procédé comprend l'étape de transférer un message comprenant la valeur du premier et/ou du second débit.

**17.** Procédé selon l'une des revendications 12 à 15, **caractérisé en ce que** le procédé comprend l'étape de déterminer, à partir des signaux pilotes pondérés, une information permettant le traitement d'un groupe de données reçu du premier dispositif de télécommunication.

**18.** Procédé selon la revendication 12, **caractérisé en ce que** plusieurs premiers dispositifs de télécommunication sont liés au second dispositif de télécommunication et **en ce qu'**au moins un signal pilote est reçu simultanément de chaque premier dispositif de télécommunication, les signaux pilotes reçus simultanément étant des signaux pilotes orthogonaux.

**19.** Procédé selon la revendication 18, **caractérisé en ce qu'**au moins une information de puissance est reçu de chaque premier dispositif de télécommunication à des temps différents et/ou dans des sous-bandes de fréquence différentes.

**20.** Dispositif pour transférer une information relative à des composantes d'interférence reçues par un premier dispositif de télécommunication et une information de puissance utilisée par le premier dispositif de télécommunication pour pondérer au moins un signal pilote transféré par le premier dispositif de télécommunication à un second dispositif de télécommunication, le premier et le second dispositifs de télécommunication étant liés au travers d'un réseau de télécommunication sans-fil, **caractérisé par**, le au moins un signal pilot étant en outre pondéré par l'information relative à des composantes d'interférence reçues par le premier dispositif de télécommunication, et en ce que le dispositif est inclus dans le premier dispositif de télécommunication et comprend :

- des moyens pour transférer plusieurs signaux pilotes pondérés selon un premier débit ;
- des moyens pour transférer plusieurs informations de puissance selon un second débit qui est strictement inférieur au premier débit.

**21.** Dispositif pour contrôler le transfert de signaux à un premier dispositif de télécommunication par un second dispositif de télécommunication au travers d'un réseau de télécommunication sans-fil, le premier et le second dispositifs de télécommunication étant liés au travers du réseau de télécommunication sans-fil, le second dispositif de télécommunication recevant du premier dispositif de télécommunication une information de puissance utilisée par le premier dispositif de télécommunication pour pondérer au moins un signal pilote transféré par le premier dispositif de télécommunication au second dispositif de télécommunication, **caractérisé par**, le au moins un signal pilot étant en outre pondéré par une information relative à des composantes d'interférence reçues par le premier dispositif de télécommunication, et en ce que le dispositif pour contrôler le transfert de signaux est inclus dans le second dispositif de télécommunication et comprend :

- des moyens pour recevoir plusieurs signaux pilotes pondérés selon un premier débit ;
- des moyens pour recevoir plusieurs informations de puissance selon un second débit qui est strictement inférieur au premier débit,
- des moyens pour déterminer, à partir d'au moins un signal pilote reçu et à partir d'au moins une information de puissance reçue antérieurement audit au moins un signal pilote, une information relative à des composantes d'interférence reçues par le premier dispositif de télécommunication,
- des moyens pour contrôler le transfert de signaux représentatifs d'un groupe de données au premier dispositif de télécommunication d'après l'information relative à des composantes d'interférence reçues par le premier dispositif de télécommunication déterminée.

**22.** Programme d'ordinateur qui peut être directement chargeable dans un dispositif programmable, comprenant des instructions ou portions de code pour mettre en oeuvre les étapes du procédé selon les revendications 1 à 11, lorsque ledit programme d'ordinateur est exécuté sur un dispositif programmable.

**23.** Programme d'ordinateur qui peut être directement chargeable dans un dispositif programmable, comprenant des instructions ou portions de code pour mettre en oeuvre les étapes du procédé selon les revendications 12 à 19, lorsque ledit programme d'ordinateur est exécuté sur un dispositif programmable.

Fig. 1

Fig. 2

10

BSAn

300 — Processor

303 — RAM

Channel I/F — 305

302 — ROM — 301

**Fig. 3**

S400 — Obtain $I_l$

S401 — Read $\eta$

S402 — Transfer $I_l \eta$

S403 — Time to transfer ?

S404 — Transfer Pilot signals

S405 — Time to report $\eta$ ?

S406 — Obtain

S407 — Transfer $\eta$

S408 — Memorize $\eta$

**Fig. 4a**

Fig. 4b

S500 — Receive pilot signals

S501 — Receive $\eta$ ?

S502 — Memorize $\eta$

S503 — Read memorized $\eta$

S504 — Estimate SINR

S505 — Use SINR for decision

**Fig. 5a**

S550 — Receive pilot signals

S551 — Successful ?

S552 — Transfer $\eta$ Update message

S556 — Read memorized $\eta$

S553 — Receive $\eta$

S554 — Memorize determined $\eta$

S557 — Estimate SINR

S558 — Use SINR for decision

To S550

S555 — Memorize received $\eta$

To S550

To S550

**Fig. 5b**

Fig. 6

Fig. 7

Fig. 8

Fig. 9

Fig. 10

S1100 — Receive $R_{IN,l}$

S1101 — Eigenvalue decomposition $R_{IN,l} = F_l \Phi_l F_l{}^H$

S1102 — Read $\eta_l$

S1103 — Calculate $g_{l,m} = [g_{l,m1}, ...., g_{l,mM}]^T$

S1104 — Transfer $g_{l,m}$ $\eta_l$

S1105 — Time to transfer ?

S1106 — Transfer pilot signals

S1107 — Time to Report $\eta_l$?

S1108 — Calculate $\eta_l$

S1109 — Transfer $\eta_l$

S1110 — Memorize $\eta_l$

Fig. 11a

S1200 — Receive signals

S1201 — Receive $\eta_l$ ?

S1202 — Memorize

S1203 — Read memorized $\eta_l$

S1204 — Estimate $J$

S1205 — Eigenvalue decomposition

S1206 — Determine largest eigenvalue

S1207 — Determine weighting vector

S1208 — Estimate SINR

S1209 — Use SINR for decision

Fig. 12a

S1150 — Receive $R_{IN,l}$

S1151 — Eigenvalue decomposition $R_{IN,l} = F_l \Phi_l F_l{}^H$

S1152 — Read $\eta_l$

S1153 — Calculate $g_{l,m} = [g_{l,m1},...,g_{l,mM}]^T$

S1154 — Transfer $g_{l,m}$ $\eta_l$

S1155 — Time to transfer ?

S1156 — Transfer pilot sgnals

S1157 — Receive $\eta_l$ update message ?

S1158 — Up/Down ?

S1159 — Adjust $\eta_l$

S1160 — Memorize $\eta_l$

S1161 — Value ?

S1162 — Memorize $\eta_l$

S1165 — Obtain $\eta_l$

S1166 — Transfer $\eta_l$

S1167 — Memorize $\eta_l$

S1163 — Time to Transfer $\eta_l$?

S1164 — Transfer $\eta_l$

## Fig. 11b

S1250 — Receive signals

S1251 — Successful ?

S1256 — Use memorized $\eta_l$

S1257 — Estimate $J$

S1258 — Eigenvalue decomposition

S1259 — Determine largest eigenvalue

S1260 — Determine weighting vector

S1261 — Estimate SINR

S1262 — Use SINR for decision

S1252 — Transfer $\eta_l$ Update message

S1253 — Receive $\eta_l$

S1254 — Memorize determined $\eta_l$

To S550

S1255 — Memorize received $\eta_l$

To S550

## Fig. 12b

Fig. 13

**EP 2 008 381 B1**

**Patent documents cited in the description**

- EP 1804409 A

- EP 0741467 A